# EUROPEAN PATENT APPLICATION

(11) **EP 1 028 026 A2**
(43) Date of publication of application: **16.08.2000**
(21) Application number: 00301044.4
(22) Date of filing: 10.02.2000
(51) Int. Cl.: B60Q 1/26

(54) **Electronic apparatus and method for emitting intelligent luminous signals**

(30) Priority: 11.02.1999 AR 9900582
(71) Applicant: Agostino, Francisco, Lanus Oeste, Buenos aires (AR); Gomez, Luis Adolfo, Lanus Oestes, Buenos Aires (AR)
(72) Inventor: Agostino, Francisco, Lanus Oeste, Buenos Aires (AR)
(74) Representative: Matthews, Howard Nicholas

(57) **Abstract**

An electronic apparatus emitting intelligent luminous signals, applicable to all types of motor vehicles and motorcycles for the purpose of preventing road accidents, said apparatus allowing for the use of a new system for emission of messages synthesized in the form of lights of different colors, and comprising a control unit and a set of sensors connected at key points in all vehicles to specially designed circuits. Said control unit includes a microprocessor connected to the sensors and a set of signaling lights connected to the microprocessor output. A non-volatile memory stores the method steps in order to instruct the microprocessor for the apparatus operation.

## Description

### 1. FIELD OF THE INVENTION

The present invention relates to a new concept of motor vehicle driving aimed at increasing safety and preventing road accidents by the implementation of a novel luminous signal system applicable to every kind of motor vehicles and motorcycles, based upon the logical interpretation of the universal color code and of the use of such colors in accordance with the luminous spectrum breakdown sequence, through a set of sensors and a specially designed transducer both connected to a control unit having an electronic microprocessor allowing for the application of this novel system.

The invention comprises an assembly formed by a set of sensors located at key points in motor vehicles, together with an optoelectronic transducer specially conceived and designed to allow for one of the main functions of this invention. Both the sensors and the transducer are connected to different inputs of a control unit having an electronic microprocessor and being specially designed and programmed to process all information supplied by each of the sensors and the transducer above mentioned, which automatically and continuously detect all movements made by a driver during the driving operations, from engine startup to switch off.

The electronic microprocessor which forms part of the system of this invention interprets the information received from its transducer and external sensors, processes it and converts it into control impulses which, applied to a double set of rear lights consisting of four different colors: red, yellow, green and blue, are transformed into "intelligent luminous signals" which will help to prevent countless accidents since they provide useful data to each driver situated behind.

The "intelligent luminous signals" will inform:
A) Whether the vehicle travelling ahead of you is moving at a constant speed, that is at cruising speed, in a normal motion, without any obstacles.
B) Whether the driver ahead of you has decided to accelerate.
C) Whether he is still increasing his speed in acceleration.
D) Whether he has stopped accelerating and has resumed his normal motion, though at a higher speed.
E) Whether he has started reducing his speed but he does not yet intend to stop.
F) Whether he is reducing his cruising speed.
G) Whether he is travelling at a constant speed but he is about to make a turn, also indicating if he will turn right or left.
H) Whether he is moving in acceleration but intends to change direction either to turn or to overtake another vehicle, also indicating the direction of the turn.
I) Whether he has started reducing his speed and tries to make a turn, indicating the direction of such a turn, but he has not yet pushed the brake pedal, that is he is losing speed in an inertial motion.
J) Whether he has already pushed the brakes but his vehicle is still moving.
K) Whether his vehicle has already stopped.
L) Whether it has started to reverse.
M) Whether it has just started moving forward and is accelerating.
N) Whether it has again reached its cruising speed.

In addition, this inventions provides a fully automatic double-intensity rear hazard lights.

Having a quick look at this information diagram, the system of the invention would appear to be a complicated signal system, but in the practice that is not so since all pieces of information detailed above are not simultaneously provided but sequentially follow one another, so as that each driver has the possibility to drive his vehicle while being permanently aware of the driving operations performed by the driver travelling ahead of him.

Since this invention will for sure promote a conceptual change in something firmly rooted all over the world, as is motor vehicle driving and everything relating to traffic signals, I find it necessary to start with some general reflections and considerations which will help to better understand and evaluate the scope and advantages of this invention, starting from the premise according to which what is generalized and accepted as normal is not always the best or the most appropriate.

### GENERAL CONSIDERATIONS AND BACKGROUND OF THE INVENTION

Since automobiles were invented countless, wonderful and surprising improvements were integrated to them both with respect to speed and performance, and safety and comfort. A very constructive improvement was the incorporation of turn indicator lights, as well as of intermittent hazard lights, also called emergency lights. Also in the last decades considerable improvements have been made as regards roadsigns. Paradoxically, basic motor vehicle rear lights, commonly referred to as "side marker lights" (side marker lamps) or "regulation lights", not only have not evolved as have technological improvements applied to vehicles but also, from their very origin, they have never followed any logic.

It happens that, seen from behind, each motor vehicle should be considered as mobile traffic-lights (the importance of this concept will be discussed below). Hence, rear lights should provide those who are driving behind with logical and specific indications in order to prevent accidents.

Has it ever been thought of what would happen if traffic-lights changed directly and immediately from green to red, in the absence of the yellow light? Could traffic-lights be simplified by removing precautionary yellow light? This seemingly incongruous and absurd concept becomes valid 24 hours a day in the millions of vehicles which continuously move along streets, roads, highways and freeways all around the world, because none of them has an intermediate light providing, as traffic-lights yellow lamp, a previous warning for those who are driving behind to be able to anticipate a sudden braking.

Such a defect shown by each and every million vehicles constantly moving all over the planet is one of the main causes of the countless road accidents which happen everywhere at any time, many of them having very serious consequences, as it is the case for "pileup" accidents mostly occurring in highways and freeways even at daylight and under the best weather conditions, that is without any rain or fog, and to a greater extent when vehicle movement conditions are adverse.

However, all automobiles, including the newest and the most expensive ones, have an even more serious defect which becomes evident when we ask ourselves the following questions:
1 - What do the rear side marker lights of a vehicle indicate to those who are driving behind? What kind of information do they give?
   ANSWER: they just indicate the presence of a vehicle, "presumably" moving normally. As to the rest, they do not provide any other information.
2 - What are red rear side marker lights based upon?, that is to say, why are they red?
   ANSWER: They are not logically founded, because under traffic regulations all over the world red lights emitted as a signal always indicate "danger - no moving forward", and this is not a permanent reality for someone driving behind another vehicle.
3 - What is the difference between the red rear side marker lights of a vehicle travelling at 120 km/h and the ones of a vehicle which has stopped or has just entered the road (e.g., coming out from a service station) and is moving at a low speed, though may be accelerating?
   ANSWER: There is no difference. Whether a vehicle is moving at a constant speed of 120 km/h or more or at a very low speed, such as when just getting into the road, or at a high speed and being about to brake suddenly, or is stopped in the middle of the road, its red rear side marker lights will be always and in any case the same red ones. Because said lights are only useful to indicate a position, that is to denote the presence of a vehicle. The proof is that such lights are only used by night, which would be acceptable if they were placed at fixed, motionless objects, while for motor vehicles the need exists for rear side marker lights to also inform about the dynamic situation of each vehicle at any time; therefore, such lights must be used day and night and whatever the weather conditions are.

According to the foregoing, we can say that the red rear side marker lights of motor vehicles and motorcycles moving all over the world are inappropriate and essentially illogical, thereby not efficiently contributing to the safety aspect which was at the origin of their implementation as "regulation lights", but rather tend to favor the occurrence of many of countless road accidents which daily take place in highways and freeways all the world round, a good deal of which are fatal, causing death; other accidents cause all kind of temporary and permanent physical and psychical disabilities as well as heavy damages to property. Many of such accidents could be prevented if all motor vehicle rear side marker lights followed a new concept based upon logic, in accordance with the state of the art.

### 3- ACKNOWLEDGEMENT OF THE PRESENT ISSUES

We must become aware of the tremendous increase in the number of vehicles throughout the world in the last decade, as well as of the higher speed at which vehicles can move, not only because they can themselves develop higher speeds but also because roads, highways and freeways are constructed to allow for higher travelling speeds.

Also, as a result of the increase of vehicles on the road and the congestion they daily cause therein, mainly at peak hours, vehicles tend to move at distances increasingly shorter from each other. If we add to this reality the higher speed at which not only automobiles but also trucks, coaches, buses, motorcycles and any other motor vehicle currently run, it is obvious that both simultaneous conditions, such as higher speed and greater proximity, allow for a considerable increase in the risk of pile-ups.

It is to be noted that though progress has made it possible for man to travel in vehicles which develop higher speeds, which consequently requires a faster reaction by drivers; the truth is that reflex actions and mechanical reactions of the human being have remained unchanged in the course of the centuries. On the contrary, the increase in concerns, stress and alcoholic drink consumption rather tend to slow the reaction time at the possibility of meeting danger.

An article published by U.S. "Popular Mechanics" magazine, Argentine Edition, N° 46-8, August 1993, says:
"According to those who defend the making of intelligent automobiles and roads to accommodate them, congestion in our freeways is not the fault of the vehicles. The real problem is that human drivers are not capable of driving automobiles skillfully enough".
"Those relying on automatic pilot will drive with a higher precision. Automatic driving will close the average thirty-meter gap separating vehicles travelling at speed in the roads with a kind of mattress, in order to anticipate the human reaction time in an emergency".
"Vehicles having autopilot will be more efficient, allowing roads to be more efficient and orderly, thus eliminating erroneous calculations which are responsible for most accidents..."
"IVHS (Intelligent Vehicle and Highway System) America, a Washington-based transport advisory group joining together politicians, inventors, executives and scientists, reckons that the creation and placing of intelligent vehicles and highways in the U.S.A. will demand almost 200 billion dollars in the course of 20 years".
"In traffic-congested areas like Los Angeles, automatic pilot car driving will possibly begin by year 2010".

A quick analysis of the preceding article is enough to understand that even though the problem is real, the proposed solution is not practical. It would be extremely costly and it is as whimsical as Utopian since it is contemplated as being "possibly applied by year 2010".

This invention, if applied to all motor vehicles, will highly contribute immediately and at a very low cost to the solution of such world-wide problem.

### 4 - LOGIC AND ELECTRONICS IN THE SERVICE OF SAFETY

In the last decade, mankind has experienced a striking progress originated at computers' large-scale utilization. Without them, air carriers, for example, could not operate as largely, efficiently and safely as they currently do. Space trips would simply be impossible. Currently, computers have already been integrated into some automobiles. It is worthy of note that the success of computers essentially resides in the fact that they work by means of a simple language based upon logic.

The language of logic is universal, because it is understood by everyone. Logic and electronics applied in conjunction with each other allow for highly good results in almost all fields of human activities. The present invention is based upon this new concept which is to be taken into account for implementation of new regulation lights in motor vehicles.

When all vehicles will be equipped with the intelligent light system of the invention, each driver will be able to "see" each movement that is performed by the driver ahead of him. He will also be able to view at any time the decisions of the preceding driver, thus being capable of anticipating any possible maneuver. Moreover, in an actually novel aspect the present invention allows, when driving behind or in the middle of a stream of vehicles, to "see" all driving operations being performed by the front drivers, for example when the queue enters a bend, at which time one can see the rear lights of the preceding vehicles.

This possibility is extremely interesting considering that when a stream of vehicles enters a bend the risk of accident considerably increases. In such situations, anyone situated behind the queue or someone coming near it at a high speed will be able to perceive the right time in which the driver located at the head of the queue has released the accelerator, and therefore to be noticed of a possible sudden braking before that driver or any other driver following him puts on the brakes.

This invention, through the use of a special transducer and electronic sensors suitably installed in key points within each vehicle, allows to convert driving operations into intelligent luminous signals, i.e. signals containing distinguishing, clear, specific, easily and instantly interpreted messages being of a great practical value for all drivers going behind, thus making it possible a safer and pleasant driving.

In a further important aspect to be taken into account when evaluating this invention, the system of the invention emits intelligent luminous signals both by day and by night, not depending upon the will nor the decision of the driver, since such a system is automatically activated by operating the vehicle ignition key and will remain detecting and processing all driving operations until the engine is switched off.

### 5- CONSIDERATIONS ON THE UNIVERSAL COLOR CODE

As this invention is structurally based on the maximum utilization of the universal color code for emitting intelligent luminous signals, that is signals containing distinguishing, precise, specific messages, we found it necessary to make a short analysis in that regard.

It is extremely important to consider impressions caused to human beings by lights according to their color, in particular when those lights are emitted as signals, and very specially when said lights correspond to traffic regulations.

Since in all countries in the world there are traffic-lights using the same code, and considering that said code is equally interpreted everywhere, we must be in tune with that and apply the same code for automobiles since, as discussed herein above, all motor vehicles should be, when seen from behind, considered as mobile traffic-lights and therefore emit specific messages backward through intelligent luminous signals.

Actually, color do not exist as such, but are rather interpretations of the different sensations caused in our mind by the waves or oscillations of the different frequencies contained in the luminous spectrum, also known as "visible range of energetic waves" wherein a different frequency corresponds to each color, the lowest visible light frequency corresponding to red color, then gradually increasing toward ultraviolet in the following order: red-amber-yellow-green-blue-magenta-violet-ultraviolet.

We can appreciate herein that the traffic-lights logic is consistent with this scientific reality;

| | | |
|---|---|---|
| Green light: | to move forward | (high frequency) |
| Yellow light: | to slow down | (mid frequency) |
| Red light: | to stop | (low frequency) |

This gradual succession of colors constitutes a code widely used in many industries throughout the world, like electronics, where a number corresponds to each color, namely:

| | | | |
|---|---|---|---|
| Black: | 0 | Green: | 5 |
| Brown: | 1 | Blue: | 6 |
| Red: | 2 | Magenta: | 7 |
| Orange/Amber: | 3 | Grey: | 8 |
| Yellow: | 4 | White: | 9 |

This invention not only allows the greatest utilization of the universal color code used in traffic-lights all over the world, by applying it to motor vehicle rear lights in combination with present technology possibilities, but also permits to take a step forward by integrating blue light (higher frequency than green light) in vehicles so as to indicate "increasing speed" or "vehicle accelerating". Under "Fundamentals" I will demonstrate by means of examples the great importance of the blue accelerating signal.

### 6- DETAILED DESCRIPTION OF THE FUNCTIONAL MODES FOR THE DEVICE OF THE INVENTION

This device, if installed on any motor vehicle, functions in 8 different modes by fully automatically switching from one mode to another, interpreting the driver's driving operations and emitting according to circumstances intelligent luminous signals for those driving behind not to be caught unawares by sudden maneuvers and/or decisions taken by the preceding driver(s).

Such modes are described as follows:
MODE 1: Light turning on while engine is switched-off or running
   **Emitted signal**: 1 Hz-frequency intermittent red and yellow rear lights
      This signal is equivalent to a double-intensity automatic hazard light.
   **Message: Caution - Possible maneuvers in any direction.**
MODE 2: Reversing
   **Emitted signal:** 2 Hz-frequency intermittent red and yellow rear light
   **Message:** Caution - Moving backwards
MODE 3: Forward movement with acceleration - Increasing speed
   **Emitted signal:** green and blue rear lights + blue front lights
   **Message:** Caution - Accelerating - No overtaking - Give way
MODE 4: End of acceleration - normal motion at constant (cruising) speed
   **Emitted signal:** Green rear lights
   **Message:** Normal motion without obstacles - Steady speed
MODE 5: Inertial motion - No accelerator and no brakes
   **Emitted signal:** Yellow rear lights
   **Message:** The driver released accelerator - Caution - Possible sudden braking
MODE 6: Inertial motion, braking
   **Emitted signal:** Fixed red rear lights + 1 Hz-frequency intermittent yellow lights
   **Message**: Caution - Braking
MODEL 7: Vehicle stopped - Engine running
   **Emitted signal:** Red rear lights + 1 Hz-frequency intermittent yellow lights. This signal is equivalent to a double-intensity automatic hazard light
   **Message:** Caution - Vehicle stopped - Slow down
MODE 8: Turn right / left
   **Emitted signal:** Upon operating the indicator stalk (switch) with the vehicle being in any of modes 1 to 7, the lights corresponding to the side of the turn will switch to the intermittent mode with a 2 Hz frequency, with the state of those on the opposite side remaining unchanged.
   **Message:** Caution - Turn or change of lane. (The information on the vehicle operational mode is maintained)

### 7 - FUNDAMENTALS AND EXAMPLES OF EACH OPERATIONAL MODE OF THIS INVENTION

### MODE 1 = LIGHT TURNING ON WITH A SWITCHED-OFF OR RUNNING ENGINE

Having regard to the safety of persons, logic indicates that since the time the ignition key of a motor vehicle is operated, such vehicle should start emitting red lights backwards both by day and by night in order to warn persons moving behind, like in parking areas, garages, streets, etc. as well as other drivers coming near with their vehicles.

To emphasize such concept, this invention provides the simultaneous turning on of red and yellow rear lights, both in the intermittent mode at a 1 Hertz frequency.

It is extremely important to understand that though red lights warn of a danger, they will be more noticeable if they are intermittent, and even more noticeable if a second set of lights of other color, in this case yellow, flicker simultaneously and in parallel with the red lights. Furthermore, the simultaneously flashing red and yellow lights are easier to view in the middle of the fog, smoke or intense rain. Also, the combination of red + yellow lights is accepted all the world round as a warning of "caution - danger".

Another additional advantage, worthy of note, becomes evident when a driver gets off his vehicle leaving the ignition key in place and children inside the car. If the children operate the ignition key and manage to switch on the ignition, the red and yellow lights will start working in the intermittent mode, even if the engine has not been started, thus resulting in an automatic warning signal for any nearby observer. The same signal is also valid in the event of an attempt to steal the vehicle, since red + yellow lights will get activated in the same way even if the thieves try to start the engine by means of the well-known "electric bridge".

We may then conclude by saying that when in MODE 1, this invention provides a "double-intensity automatic hazard light" that no vehicle possesses so far.

### MODE 2: REVERSE MOVEMENT

It is worthy to be noted that currently no vehicle has automatic warning lights to be used when reversing. It is true that in all modern vehicles, when operating the reverse gear, rear white lights turn on, but these lights are not useful to warn of a danger (nor will they for they are white), but to light up the ground. It is also true that present vehicles possess hand-activated electric hazard lights which use depends on the driving habits, will and responsibility of each driver. For such reasons, current electric hazard lights are not really efficient as regards safety.

Furthermore, something absurd happens in all vehicles when reversing: whenever brakes are applied to stop motion, the red brake lights then turn on precisely at the time when the greatest danger has ceased, which is contradictory.

This invention overcomes such difficulties and defects by providing fully automatic simultaneous red + yellow lights in the intermittent mode for use during reversing and until the engine is switched off or the automobile moves forward. In this case, the intermittent red + yellow signal oscillates at a 2 Hz frequency thus differing from the 1 Hz-frequency "stopped vehicle" red + yellow signal.

At this point it is to be noted that when selecting the reverse gear no visible changes are produced, except for the white lights turning on to light up the ground, since the intermittent red + yellow lights (at 1 Hz frequency) remain unchanged since the moment the ignition key was operated. It would then appear that the system does not function when the reverse gear is selected. That is not so, as the microprocessor of this novel system detects the least movement of the vehicle, thus activating all features for normal motion, that is when moving forward. But when the vehicle starts moving by reversing, the microprocessor detects such motion as such by means of the transducer coupled to the gearbox output, thus canceling all functions for forward movement and just allowing activation of white lights to light up the ground, together with red + yellow lights which, in the intermittent mode, at the very moment of starting moving backwards, change their oscillation frequency from 1 Hertz to 2 Hertz, thus becoming a distinguishing, clear, unequivocal signal of the car being moving backwards.

In addition, in OPERATIONAL MODE 2 this device provides an intermittent signal which, applied to an optional beeper becomes an audible signal intended to warn blind persons situated behind the vehicle at the time it is about to move backwards, as well as to warn inattentive persons who have not watched the corresponding luminous signal. This audible signal is activated upon selection of the reverse gear and before the vehicle starts reversing.

We can then say that the present invention provides, in reverse MODE 2, a fully automatic double-intensity hazard light emphasized by the double oscillation frequency during reversing and also by providing an audible signal.

### MODE 3- FORWARD MOVEMENT WITH ACCELERATION - INCREASING SPEED

Considering that high speed is the variable most favoring the occurrence of accidents and that their seriousness is directly proportional to the speed at which they take place, it is to be noted that all millions of vehicles currently going along highways and freeways in our planet lack of an appropriate signal to indicate "caution, vehicle in progressive acceleration".

It is also to be noted here that motor vehicle makers have always shown a tendency to furnish their new models with an increasingly higher acceleration (or "pickup") power, specially in cars, which constitute the largest portion of the motor vehicles in the world. We must take into account that velocity is a direct consequence of acceleration. There is no velocity without acceleration. This is an irrefutable physical reality. Knowing that the vehicle travelling in front is moving in acceleration is a very useful information for each driver. Hence, considering the risks and consequences originated at speed, which is in turn a direct result of acceleration, it is absolutely necessary that all vehicles, in order to favor safety on the roads, emit an appropriate luminous signal each time his driver "steps" on the accelerator either to overtake another vehicle or stream of vehicles or to reach its cruising speed such as for example when entering or reentering the road.

The present invention ingeniously overcomes the difficulties derived from the absence of acceleration signal in vehicles, since blue side marker lights are automatically turned on when a driver "steps" on the accelerator to "pickup" or simply to increase his vehicle's cruising speed. Such lights will remain on during the whole acceleration period, thus turning off when the driver releases the accelerator after having reached the desired speed or objective. During the acceleration operation, the state of the green lights will remain unchanged.

Why blue lights? Because as explained under "Considerations on the universal color code" section, blue light corresponds in the luminous spectrum to a wave having a higher frequency than green light, thus being easy to associate blue light with "higher" speed". Considering that the present novel device provides a green luminous light to indicate "normal motion at constant speed", blue lights will, during the acceleration process, synthesize the following message: "caution, I am accelerating".

Before going deeper in the development of this function, it is to be noted that this invention was conceived to furnish motor vehicles with intelligent luminous signals at their back, that is signals containing clear, distinguishing, specific messages for those who are driving behind, and to allow such messages to be easily and instantly interpreted. But in the case of the blue acceleration light an exception should be made, also implementing same at the front of all vehicles. The reasons for such exception will be explained in point C of the following fundamentals.

### ESSENTIAL REASONS FOR IMPLEMENTING THE USE OF A LUMINOUS ACCELERATION SIGNAL IN VEHICLES

A) It is not advisable to try to overtake a vehicle while it is accelerating, because in order to overtake it a longer time is required than when moving at a constant speed; the higher the travelling speed the longer the required time, thus increasing the risk of a head-on collision in two-way roads and highways. In addition, to overtake an accelerating vehicle it is necessary to accelerate much more, all the more so since the vehicle to be overtaken increases its speed, the situation becoming worse when one moves against the wind and/or uphill, even if the slope is very smooth, and much worse when the available power is not enough to reach the objective.
   Such a movement is extremely dangerous and one of the main causes of serious head-on collisions, since it many times happens that a third vehicle moving at high speed is coming in the opposite direction exactly at the time in which both vehicles are situated by each other; and that simultaneously the vehicle intending to overtake lacks of enough power to do so and also has no time to return to retrieve his position behind nor enough space to place itself between two other vehicles, such as when a driver is attempting to overtake not another vehicle but a queue of vehicles, thus resulting in a potentially greater danger.
   It is to be noted here that there are always some irresponsible drivers who, when seeing that another one is trying to overtake them, accelerate even more to the limit to stay in front because it gives them great pleasure to demonstrate that their vehicles are more powerful, or because they just do not accept to be overtaken.
B) The blue luminous acceleration light also warns that the vehicle emitting it could have just restarted moving, in which case it would be moving at a very low speed such as for example when just reentering the road after a short stop.
C) The need exists to implement an acceleration signal through the integration of blue lights at the front of the vehicles, since these lights will constitute a useful information which will facilitate reckoning the maneuvers whenever a driver whishes to "cross" in front of another vehicle coming in the opposite direction, either turning left to get out of the road or crossing the road at intersections devoid of traffic-lights. In such cases, the blue acceleration signal located at the front will constitute a priceless warning as regards the inconvenience of crossing in front of a vehicle under acceleration since in such a situation it is difficult to reckon the time of approach between both vehicles, since even though the distance between them could be calculated rather accurately, it would be nearly impossible to calculate the time of approach when one of the factors of the calculation, in this case speed, is not constant but gradually varies.

It is to be noted here that in the article published in "Popular Mechanics" as mentioned above in Chapter 3 of this Description, the IVHS (Intelligent Vehicles and Highway Systems) America, a known authority in the art, states as follows: "most of the accidents are caused by errors in calculation".

Generally, when a driver decides to do a risky maneuver, he first accelerates his vehicle. Unfortunately, as the tremendous importance of an acceleration signal has never been appreciated, no vehicle possesses, therefore increasing likelihood of errors in calculation made by drivers.

The present invention efficiently contributes to overcome such a troublesome situation, since if a driver watches the acceleration signal from the vehicle travelling in front of his, he will immediately be allowed to evaluate the situation and decide whether to go on moving near that vehicle or to rather reduce his speed in order to be at the greatest distance away, if he thinks that the preceding driver is about to do a risky maneuver, thus preventing any damages.

A typical situation which often occurs when driving in a road will be discussed below by way of example to show the need for all vehicles to be equipped at their front and back with an instantaneous, clear, unequivocal acceleration signal as the one provided by the present invention.
Example: when a stream of vehicles travelling on a two-way road approaches and wishes to overtake a vehicle moving at a lower speed, it would be logical that the driver leading the stream will be the first one to "show" himself out of the queue in the wrong direction so as to overtake the preceding vehicle, since such leading vehicle is best located to watch the road in front and to do the overtaking at the right time. Then it will be followed by the other vehicles going behind, one by one in the same order as the queue is formed.

However, in practice things do not happen like that. It rather happens that the last one in the queue, when perceiving that the vehicles in front have reduced their speed and the queue has become "compact", rushes out to overtake them all. As a result of such a common and illogical behavior, the last one in the queue becomes the leader, followed by those which preceded him, such as that the positions in the stream change over, that is the last ones become the first ones and those ones who were at the head remain at the bottom.

These maneuvers usually makes drivers in front of the queue bad-tempered when they try to overtake the slower preceding vehicle but have to immediately return to their position because another vehicle is coming fast from behind (in progressive acceleration) to take the lead. As a result, every new attempt to overtake the slower vehicle will be made fearfully and uncertainly since the driver cannot know when another vehicle going behind will try to rush to pass first. This situation causes anxiety and confusion which in turn makes drivers bad-tempered, thus threatening everyone's safety.

As vehicles are not provided with a clear, instant acceleration signal, a driver never knows if the one preceding him has decided to accelerate to then leaving its lane and overtake another vehicle. He also cannot know if the next vehicle behind him has decided to do the same. Therefore, if he decides to move out of the queue to pass, he will be acting uncertainly since he will be afraid the preceding driver will cross in front of him after having taken the same decision 1 or 2 seconds before, or another vehicle coming from behind will run into him.

The indicator light has not yet been mentioned as a signal of changing lane for the purpose of overtaking. As a matter of fact, such signal is not automatic and even though everyone should use it to warn of the intention of changing lane, the truth id that not all drivers always comply with this rule. In any case, the indicator lights are specifically useful to say "I am going to change lane" or "I am going to leave the road". Therefore, if the immediate objective consists in overtaking another vehicle, a previous more specific, precise signal is required, such as the acceleration signal, since it is possible to take a different lane without accelerating, but it is not possible to overtake another vehicle without accelerating.

The essential feature in this regard is to recognize that when driving at relatively high speeds, it is very difficult to perceive at first sight if a nearby vehicle has begun to accelerate, specially when at that time and place there are no other vehicles travelling at a constant speed which mat be used as a reference. Under such circumstances, the acceleration of another vehicle is only perceived after some instants, upon watching the following one suddenly approaching or the preceding one markedly moving away. It is to be considered that the higher the driving speed the faster the maneuvering decisions should be taken and executed; but for such purpose it would be ideal to rely on an immediate warning signal.

The blue luminous acceleration signal provided by the present invention is emitted at the same instant as "stepping" on the accelerator to "pickup". Considering that in order to perceive acceleration by observing two vehicles approaching or moving away several seconds are required, whereas light propagates at 300,000 kilometers per second, this invention undoubtedly provides the most effective acceleration warning signal never conceived. It is to be noted here that when driving at relatively high speeds fractions of a second may signify the difference between life and death.

It will be shown now how this invention will allow for the improvement of road safety in such cases as stated above. However, the following should be first taken into account: all inventions which, conceived to solve difficulties, make improvements and favor people's safety, may affect habits and customs, would require the reeducation of the user to some extent, such that the advantages of the new invention are most useful to him/her.

But it is known that there is no reeducation without discipline. Therefore, a new regulation should be implemented by relevant authorities so as to forbid overtaking a stream of vehicles in two-way roads. Such authorities should rather through road education campaigns teach that the vehicle leading a stream of vehicles moving behind an automobile travelling at a speed lower than the speed limit, will be the first one to overtake the latter, then being followed by all the other vehicles one at the time. In such a logical and orderly way, the last vehicles in the queue will not be forced to pass the whole tailback by moving the wrong way for a long time and distance, thus facing serious risks, but each driver would only overtake the slower vehicle, which would take much less time, be safer and prevent the "inversion" of the queue and its associated inconveniences and risks.

The blue acceleration signal provided by the present invention will efficiently contribute to make that possible, as follows:

When a stream of vehicles travels on a two-way road behind another vehicle moving at a speed lower than the speed-limit for that place, all drivers which may decide to overtake will first operate the corresponding indicator to indicate a change of lane, then will evaluate whether the road conditions are adequate and whether it is the right time to pass, since no vehicle can be seen coming in the opposite direction within a short distance. Once the driver has taken the decision to change lane in order to overtake, and before starting acceleration, he will make sure that no other vehicle coming behind him is emitting a blue acceleration light and also that such a light is not on in the preceding vehicle, so as to most safely do his maneuver. If, on the other hand, he sees the blue acceleration light on in any following or the preceding vehicle, even if the latter has not yet turned to leave the lane, he could postpone his decision to prevent his vehicle from bumping into that vehicle whose driver may have coincidentally decided to pass at the same time.

Another typical situation which will permit to appreciate and evaluate the need for a luminous signal is that of a driver approaching a sharp curve (that is a bend in which the features of the place (vegetation, mountains, buildings, etc.) do not allow to see what is on the other side of the bend] at the end of which such driver suddenly encounters in his way another vehicle emitting green + blue lights to indicate it is in full acceleration. Under such circumstances, blue lights will warn that that vehicle could have just restarted moving, such as when leaving a service station or when entering the main road from a feeder road, in which case it could still be moving at a very low speed, thus allowing the driver situated behind to act accordingly in advance, before checking the state of the situation.

In such a case, in the absence of a blue acceleration signal, the driver will be aware of the reality after a sudden approach, may be when it is late to prevent an accident. One must remember that a vehicle travelling at a hundred kilometers per hour needs a minimum distance of 100 meters to come a to a final stop on a dry road surface and 150 meters if the road surface is wet, so any anticipated warning signal will be highly useful.

As already stated with regard to OPERATIONAL MODE 3 of this invention applicable to motor vehicles, the practical advantage is the use of a blue luminous acceleration light which, by having a velocity of propagation of 300,000 kilometers per seconds, allows to be seen before the actual acceleration is perceived when two vehicles are approaching or moving away from each other, thus permitting to all drivers to rely on such a signal to optimize in advance their calculations and act accordingly.

According to the foregoing, the blue acceleration signal provided by this invention for all motor vehicles constitutes a novel, priceless technical contribution in the service of road safety.

### MODE 4 = NORMAL MOTION AT CONSTANT, CRUISING SPEED

Any vehicle moving normally, that is without any problems and obstacles, at constant, cruising speed, does not constitute any danger for those who are driving behind. In such situation, the logic indicates that its rear side marker lights should be green instead of the current red ones, since red light is always associated with "danger - no moving forward". Furthermore, for the sake of road safety it is absolutely necessary to be able to distinguish a normally-travelling vehicle, may be at a high speed, from another vehicle which is braking or has already stopped, for which reason it would be appropriate -and indispensable- to implement such differentiation by means of luminous signals of different colors, according to the logic in accordance with the code applied in all traffic signals used throughout the world.

As discussed above, all motor vehicles seen from behind should be considered as mobile traffic-lights. We will now see why:
Example: If a driver travelling normally by night along an unlit road at a speed of 100 kilometers per hour emerges from a bend and observes in his way a pair of red lights, according to the current road regulations this driver will immediately think of another vehicle moving ahead of him at a normal, cruising speed, say 100 kilometers per hour, but that vehicle could have entered the road just a few seconds ago, in which case it would be still moving at a very low speed, though accelerating. It could also be stopped because of any slight damage, because the driver or any passenger fell ill, or any other reason.

Importantly, in such situations which so often happen in the roads, in all cases the rear side marker lights will always be the same: red, whether the vehicle seen when going out of a bend is moving at a high speed or at a very low speed or is stopped.

When facing such a situation, it is reasonable to think that from the moment the driver coming out from the bend sees the other vehicle until he reacts to apply the brakes after having observed a sudden approach, an average 40-year old driver may take some 3 seconds, provided that he is not inattentive at that point. It is also to be taken into account that the depth of night vision is limited in most people, whereby the reaction time may be even greater than 3 seconds.

It is worthy of note that an automobile travelling at 100 kilometers per hour covers 83 meters every 3 seconds and needs a distance of approximately 100 meters to come to a complete stop (on a dry road surface) from the time brakes are applied. If the 83 meters covered since the other vehicle is seen until brakes are applied, are added to the 100 meters needed to stop, a total covered distance of 183 meters will be obtained. If at the point of noticing the vehicle in question the latter was only at 100 meters away and was stopped or moving at a very low speed, a very violent collision would perhaps be unavoidable, since when faced with an unexpected and sudden dangerous situation people usually tend to have a block and their reflexes momentarily paralyzed.

The problem is even more serious when behind the vehicle coming out of the bend there is a tailback. The driver of the present example would remain trapped in the middle of a multiple collision or a pile-up. This type of accident occurs increasingly often all over the world.

It is to be noted here that as people gets older reflex reactions become increasingly slow. In contrast, younger persons possess quicker reflexes but at the same time they have generally a tendency to drive at higher speeds, whereby in any case the high risk of accident persists.

It is true that if faced with a typical situation as the one exemplified herein, one could maneuver to avoid the vehicle that is stopped or the one moving at a low speed, but that is not always possible because in two-way roads many times traffic moving in the opposite direction may obstruct and even impede such a maneuver or, worse, a head-on collision could happen having dreadful consequences if at that time and place two streams of vehicles were crossing each other in opposite directions.

If all vehicles were equipped with a system such as that provided by this invention, when a driver coming out of a bend notices the vehicle preceding him, the color of its rear lights will let him know immediately whether the vehicle in question is travelling normally at constant speed, whether it is accelerating or decelerating and whether it is braking or has already stopped. Therefore, the reaction time needed to apply the brakes, if necessary, would be much lesser since the driver's reaction would not be the result of observing a sudden approach but of instantly detecting a luminous signal at a distance, given that the light propagates at a speed of 300,000 kilometers per second, whereby the possibilities of preventing an accident would considerably increase. Great stress is herein laid upon the fact that when driving at high speeds, a single second may signify the difference between life and death.

It is also important to take into account that the perception of fast approach between two objects from a fixed or moving point is inversely proportional to the distance between the objects, that is the perception of approach is minimal at the greatest distance and maximal at the shortest distance, when it is perhaps too late to act. Hence, the luminous signal provided by this invention is the most efficient means on which quick and safe calculations may be based during any vehicle's driving operations.

The example above, taken from the daily reality at any time and place, shows that current red side marker lights, also called regulation lights, are inadequate and opposite to logic. Therefore, for each situation motor vehicles should emit backwards luminous signals of different colors, making it clear that for a vehicle moving normally, at constant cruising speed, without any problems and obstacles, its most appropriate rear side marker lights should be green in color, that is = to give the **go-ahead to go on behind or to overtake without any risk.**

### MODE 5 = INERTIAL MOTION - NO ACCELERATOR AND NO BRAKES

The term "inertial motion' means any movement of a body which moves as a result of kinetic energy accumulated in its mass from the moment when an internal or external energy source imparted it the initial movement, until the acceleration stops. A body under such conditions is then said to go on moving by its own inertia until the kinetic energy accumulated in its mass becomes exhausted.

Applying this scientific concept to a motor vehicle, we can say that a vehicle in inertial motion is any vehicle the driver of which has released the accelerator and lets it go forward without braking, whereby such vehicle will continue moving, by the force of inertia gradually losing speed.

It is worthy of note that free inertial motion in motor vehicles usually lasts from a fraction of a second to several seconds. This condition continuously repeats during the driving operations of any motor vehicle, both in town and on a road, and free inertial motion, despite of being an invaluable source of information for all drivers, has not been utilized to date in no motor vehicle nowhere in the world.

The electronic microprocessor which forms part of this invention recognizes the movement of a vehicle when it is travelling in free inertial motion, that is without using the accelerator nor applying the brakes, from the very instant when this stage of the movement starts, i.e. when releasing the accelerator. As will be discussed below, the present invention efficiently contributes to road safety by taking advantage of such a condition through a novel device, but it is at first necessary to explore the present situation such that the advantages of the instant invention can be better appreciated and evaluated with respect to its free inertial motion operational function - mode 5.

If traffic lights changed directly from green to red, there would likely be more accidents than without any traffic lights, because facing the sudden, surprising red light it would be very difficult to decide whether slamming on the brakes or going through at red. Obviously, faced with different situations, some will decide to brake sharply while others would consider "more cautious" to cross faster. Though at red, thus creating very risky situations in both cases.

This seems just a hypothesis but it is not so since though all traffic lights include a yellow light, there always exist traffic lights in which yellow light does not work as a result of temporary failures, thus changing directly from green to red. It is well known that this situation usually causes many serious accidents.

Starting from the assumption that all motor vehicles should be considered as mobile traffic lights when seen from behind, it is logical that, as such, it has to emit backwards more luminous signals than fixed traffic lights, such that those who are driving behind may be warned in anticipation of each maneuver or situation pertaining to the preceding vehicle.

It would be absurd and hence unacceptable that traffic lights pass suddenly from green to red, without passing through the so-needed caution yellow light. However, at the time of reading this description, millions of vehicles moving normally at 100, 120 or more kilometers per hour suddenly become vehicles brought directly to a sudden halt without any previous notice, because no vehicle possesses a luminous signal which, as the yellow one included in traffic lights, provides a previous warning for allowing those driving behind to act so as to anticipate a sudden braking. As a matter of fact, with current conventional lights, called regulation lights, if it is daytime, red brake lights will indicate "brakes already applied" and, if it is nighttime, red rear side marker lights indicating "normal motion" will in a fraction of a second become a more intense red color, thus also indicating "brakes already applied", in past tense and without prior notice.

**If red brake lights are independent from red side marker lights, as is the case in many models of vehicles, the difficulties inherent to the present system will not be in the least solved, since in all cases and both by day and by night red brake lights turn on logically once the corresponding pedal has been pressed and without prior notice, when the driver situated behind is still stepping on the accelerator; this situation often causes serious accidents many times pile-ups, specially when the preceding driver has effected a sudden braking.**

Interestingly, new Ford automobiles are provided with an additional manual named "Safety Warnings Facts", in which 1998 version, page 3.14, says as follows: "Upon seeing the brake light of the vehicle moving ahead of yours, apply the brakes. Remember: the other driver has already braked when you are still stepping on the accelerator". This warning given by one of the largest car making companies in the world constitutes the explicit recognition of a serious defect existing in all vehicles which cause many accidents all over the world and which is so ingeniously overcome by this invention.

It is also to be noted here that many roadsigns contain the legend: "make braking signals". Actually, through signs as that one drivers are asked to emit braking signals before braking, such that those driving behind are not surprised by a sudden and sharp braking. However, all drivers wishing to take notice of those signs will find that his own vehicle, even though it is the most luxurious, has not a device allowing to emit braking signals before applying the brakes. It is then obvious that through said signs drivers are requested to put their hands out of the window and move them such that those following them interpret such action as "caution, I am going to brake". Paradoxically, to put one's hands out of the windows is forbidden in all public transport vehicles under a specific municipal ordinance valid all over Argentina, the same as almost everywhere in the world. Because putting one's hands out of the car windows constitutes a serious risk for the occupants of any vehicle, either publicly or privately owned.

In page 3.15 of the above-mentioned Ford's manual the following can be read: "Show your intentions by creating the conditions for the other driver to conform his behavior to your way of driving. Use turn indicators and brake lights to make signaling".

This emphasizes the need for providing all vehicles with an automatic caution signal, prior to brake-applying, that is a specific, distinguishing signal clearly warning "caution, I am going to brake", for the driver going behind to act accordingly without risking to be surprised by a sudden and sharp braking.

For a better understanding of the scope and advantages of the instant invention, it is important to appropriately establish the difference between a sudden braking and a sharp braking. A sudden braking is that one effected without prior notice, unexpectedly. However, it may not be sharp and therefore have no consequences. In contrast, a sharp braking is a very quick braking wherein speed reduces to zero or to a minimum in a very short time, which may have consequences when the driver following the braking vehicle cannot stop his own vehicle in time to avoid an accident. However, sharp braking is not necessarily surprising. Indeed, it is not surprising if a prior notice exists, in which case it does not surprise. In daily reality it happens many times that a sharp braking is not sudden for the driver executing it but it indeed is for the driver coming behind. This situation will be illustrated by the following example:

A driver designated "A" is driving his vehicle at 100 kilometers per hour, followed by another vehicle which driver will be designated "B". At a given time, driver "A" observes at a certain distance a possible risky situation, not yet well defined, but which, on his opinion, would require perhaps a sharp braking. At the very moment when this "A" driver detects the doubtful situation ahead of him, he releases the accelerator but does not yet puts on the brakes, though by caution he decides to lean his foot on the brake pedal but without pressing it down. If he then more clearly sees that he is getting near to a dangerous situation, he will immediately apply the brakes.

This is a sharp braking, which does not constitute a sudden braking from the perspective of the driver executing it, since he was already both mentally and physically ready for braking (his foot resting on the brake pedal), but will be sharp and sudden from the perspective of driver "B" since the latter could not see when the driver "A" released the accelerator and put his foot close to the brake pedal, thus being surprised by a sharp and logically sudden braking.

In a such typical situation, which permanently reiterates everywhere, from the time when driver "A" releases the accelerator until he decides to sharply apply his breaks, 2, 3 or more seconds of free inertial motion may pass. This is precious time, not yet utilized, to warn driver "B" that driver "A" has already released the accelerator, that he may have leaned on the brake pedal and that consequently he may jam on the brakes at any time.

It will now be discussed how the system of the invention works in a situation such as that described above, in which driver "A" is driving his vehicle at 100 kilometers per hour followed by driver "B" in another vehicle. At the very moment when driver "A" releases the accelerator, his vehicle's rear green lights will turn oft, with yellow caution lights simultaneously turning on, which happens fully automatically, that is directly without the need for any voluntary action by driver "A", and since light propagates at a speed of 300,000 kilometers per second, driver "B" will instantly observe the change of lights (from green to yellow) whereby he will immediately know that driver "A" has just released the accelerator and has not yet pressed his brake pedal, but may have already put his foot down thereon.

Faced with this situation, driver "B" has the choice to repeat or "copy" exactly the sane operation performed by driver "A", that is to release the accelerator and immediately rest his foot on the brake pedal. This operation may be performed in a fraction of a second, whereby driver "B" would be ready to immediately apply his brakes without any delay, in the event that driver "A" decides to brake hard. How this invention function under such circumstances will be discussed in the next chapter.

Another remarkable advantage of yellow caution light provided by the instant invention is that driver "B" of this example can go even further for preventing an accident, slightly braking his vehicle upon observing the yellow light from preceding "A" vehicle, so as to keep at a greater distance therefrom, thus minimizing the possibility of an accident. Note the difference: with the current system used all over the world, driver "B" will take the decision of braking his vehicle only after having observed that the driver preceding him has already decided and applied the brakes, while the present invention, if applied to all vehicles, will allow to anticipate the move by braking before the preceding vehicle.

Another major advantage of this invention is that whenever a driver leading a stream of vehicles releases the accelerator, without yet applying the brakes, such a maneuver will be instantaneously noticed by the driver following immediately behind upon perceiving light change from green to yellow, thus being able to immediately perform the same operation. Consequently, each and every driver following him as part of the tailback may "copy" the same operation in an almost simultaneous succession, thus having each the possibility of being warned in advance to a sharp braking and of acting accordingly.

In addition, in OPERATIONAL MODE 5 = INERTIAL MOTION - NO ACCELERATOR AND NO BRAKES APPLIED, this invention offers another invaluable possibility of preventing road accidents, which will be described below:

When the driver of a vehicle is followed by another driver at a very short distance, he often has some trouble trying to slow down in order to turn or stop, particularly when followed by a big-sized vehicle like a truck, a coach or a trailer; the higher their travelling speed is, the more difficult it is. This is a common suffering for all car drivers when seeing that the next vehicle behind them "falls on top" of them, which gets on one's nerves and sometimes causes a certain degree of desperation, such as when there are children aboard the vehicle in question. All that generates high-risk situations in which the car driver tries desperately to warn the driver who is "falling on top" of him by putting his right hand out of the window so as to make "braking signals". The situation as described above is not something that could sometime happen to a car driver but something that happens already often to all people driving a vehicle.

The present invention provides an effective solution to this problem. Though this novel system is fully automatic in regard of intelligent luminous signals emission, since signals containing specific messages are generated and emitted without requiring any voluntary action from the driver, the present invention provides the driver with the possibility of "anticipating" voluntarily the caution signal prior to braking (yellow light) for the one driving behind to be warned and to start braking well beforehand.

In the above-described case, the driver of the vehicle which is closely followed by another vehicle only needs to release the accelerator -not yet using the brakes- when still being at a certain distance from the point at which he would normally start braking if he were not closely followed by another vehicle. When doing so, his rear side marker lights will immediately change from green (= normal motion) to yellow (caution - reducing speed with the possibility of braking). Thus, the driver would send backwards an automatic braking signal, though intentionally anticipated at will.

It is noteworthy that all warning signals have a better result when activated as quickly as possible. In the event of a potential high-risk situation as a result of adverse weather conditions such as rain, snow, fog, smoke, etc., this novel invention provides the driver with the possibility of emphasize his caution signal. To do so, after having released the accelerator, he will only need to softly "step on" the brake pedal and immediately release it, whereby his yellow caution lights will automatically and instantaneously change to the intermittent mode, then remaining in that state even with the brake pedal at the released position and until the accelerator is again "stepped on". It has been proven that any luminous signal, if flickering at a frequency of 1 to 2 Hertz, attracts more attention than if it were steady.

Any driver, faced with such a situation, would be sufficiently warned in advance in respect of the imminent need for braking by the driver going ahead of him. He may then brake his vehicle comfortably and without any risk.

To summarize the foregoing, the present invention, in its OPERATIONAL MODE 5 = INERTIAL MOTION - NO ACCELERATOR AND NO BRAKES APPLIED, will meet a vital need in respect of motor vehicle traffic, since no devices exists to date which, applied to vehicles, provides each driver with a clear, distinguishing warning signal prior to applying the brakes, so as not to be surprised by a sharp and sudden braking.

This defect present in all vehicles currently existing all the world round is one of the main causes of road accidents, since though head-on collisions tend to occur in two-way roads, collisions with the back of the vehicles happen everywhere and many times generate a head-on collision, such as when the vehicle collided from behind loses stability and is thrown out of control on the opposite way, or such as when a driver rushes instinctively on the opposite lane to avoid colliding with the vehicle preceding him for the latter has been sharply and suddenly braked without any prior warning signal like the yellow caution light which is very efficiently provided by the present invention.

### MODE 6= INERTIAL MOTION - BRAKING

This condition is quite similar to MODE 5 in that both cases relate to a vehicle moving by inertia, but an essential difference exists between one phase of the inertial motion an the other one, and considering that both phases permanently repeat during the driving operations for any vehicle, it is very important to distinguish one phase from the other and to provide a different signal for each situation. It is worthy of note that outstanding personalities of Argentine and other countries' jurisprudence agree that **motor vehicles are dangerous machines.** Therefore, everything that may be provided for the purpose of minimizing the risks must be seriously taken into account.

In inertial motion without accelerator and without brakes (MODE 5) a vehicle is gradually but slowly losing speed. In inertial motion with the brakes applied, though loss of speed is also gradual, it is logically fast, sometimes very fast and other times very sharp, depending on the force applied on the brake pedal. Therefore, there is a pressing need for each driver to "know" in which of both inertial motion phases the preceding vehicle is, given that from the moment a phase initiates what could happen later may be very different for each situation. It is then necessary for each driver to be warned in advance.

Under MODE 5 - INERTIAL MOTION - NO ACCELERATOR AND NO BRAKES APPLIED, it was discussed that at the moment a driver releases the accelerator and let his vehicle to go on moving by its own inertia, his rear lights will automatically switch from green (= normal motion) to yellow (caution - possible sharp braking).

It is worthy of note that when a driver releases the accelerator, he does not always intend to apply the brakes immediately. May be most of the times he does so to reduce speed, for example when driving in a tailback, or because he reckons that he may perhaps apply the brakes at a short distance, but the situation is not yet defined. In such cases, the driver many times does not even release the accelerator but simply fully eliminates any pressure by putting his foot by the pedal. If the driver then decides to resume normal motion, he will again lean his foot on the accelerator in which case his yellow caution lights will again switch to green, whereby the risk of a sudden braking disappears.

If, on the other hand, the driver decides to fast reduce his speed, whether to continue at a considerably lower speed or to do a maneuver or to come to a full stop, he will "step on" the brake pedal. At that very instant, his red rear lights will turn on whilst yellow caution lights, steady so far, will simultaneously switch to the intermittent mode at the frequency of 1 Hertz. The signal now in operation is as follows:
Steady read lights + intermittent yellow lights
Emitted message: **"Caution - I am braking"**

It is obvious that the simultaneous action of both set of lights such as fixed red lights + intermittent yellow lights constitutes a signal sufficiently intense so as to allow the next following driver to be clearly warned and act consequently. Furthermore, great stress must be laid on the fact that the device or system of this invention works both by day and by night since it is activated automatically upon operating the engine's ignition key.

A further advantageous feature of this invention in its MODE 6 (= inertial motion - braking) is that yellow caution lights, which automatically switch to the intermittent mode upon pressing down the brake pedal, even if for a fraction of a second, will continue in the intermittent mode even after said brake pedal has been released and until the accelerator is again activated. In contrast, the steady red lights remain on only while a pressure is exercised on the brake pedal. Thus, when a driver "steps' on the brake pedal, the red lights turn on while the yellow ones start flickering at 1-Hertz frequency. If the driver then releases the brakes while the vehicle is still moving, the red lights will turn off while yellow caution lights will persist intermittent. In this situation the message would be as follows:
**"Braking interrupted - caution - it may be restarted"**

If the driver now decides to brake until fully stopping his vehicle, he will "step" again on the brake pedal. At that time the red rear lights will turn on, always in the steady mode, whilst yellow lights will remain intermittent at the frequency of 1 Hertz. Both sets of lights will remain unchanged until the movement of the vehicles reduces to zero. What happens from this moment on will be explained in the next chapter (MODE 7 = vehicle stopped).

It is again worthy of note herein that the simultaneous emission of both luminous signals (yellow caution light + red danger light) provide those who are driving behind with a more stressed and intense warning, particularly with the yellow light flickering at the frequency of 1 Hertz as in this case, since an intermittent luminous signal contains light + rhythm. Furthermore, simultaneous intermittent red + yellow lights are more easily noticed in the middle of the fog, where pile-up danger considerably increases.

In addition, since all driver generations have got used to interpret the red rear lights, not only as a braking signal but also as an indication of normal motion (current red side marker lights), **it is absolutely necessary to break such a concept,** as contradictory as ambivalent, by attaching intermittent yellow lights to current red lights such that the brakes applied signal is sufficiently clear and unequivocal both by day and by night and under all imaginable weather conditions.

It is true that red brake lights are more intense than side marker lights, but it is also true that in rainy days, the headlamps usually become opaque as a result of being splashed with dirty water, which causes a marked reduction in the braking signal brightness. In such a situation, if a driver turns his eyes away for a moment, as usually happens, and during that instant the preceding driver applied the brakes, the former could hardly notice the change of signal, thus reacting after perceiving a sudden approach between both vehicles, may be when he has already not enough space nor time to avoid a collision.

It is also true that recently many cars have been supplied with a third brake light placed in the center of the rear window, with the obvious intention to enhance the braking signal, but this reasserts the concept which originated this invention in that the braking signal used since automobile invention to present time was not effective. Furthermore, the inclusion of the third mentioned brake light, though enhancing the signal, does not constitute itself any ingenious innovation but it "comes to the same thing" whereby such light suffers from the same defects. The proof is that recently a continuously increasing amount of vehicles are including at their back a curious variety of intermittent lights, which are activated while pressing down the brake pedal.

These lights, which began being blue, are now green, white, yellow, red and fuchsia too, and automobiles may even be seen carrying several such lights in different colors, all together at the back and in the front, thus creating a sort of confusion among drivers because such arrangement breaks the regulations of all international codes in respect of the interpretation of luminous signals. The use of these lamps is quickly extending everywhere, which evidently shows that not even the third red brake light included some time ago in the automobiles' rear window solves the problems which originated its application. Therefore, the need remains of a really ingenious and efficient system such as that provided by the instant invention.

### MODE 7 = STOPPED VEHICLE

As discussed above in OPERATIONAL MODE 6 - INERTIAL MOTION - BRAKING, this invention causes a moving vehicle in which brakes have been applied to emit backwards steady red luminous lights simultaneously with intermittent yellow lights at the frequency of 1 Hertz, from the moment its driver applied the brakes until the vehicle comes to a complete stop.

At the very moment when the movement reduces to zero, the red lights will automatically switch from the steady mode to the intermittent mode and start flickering synchronously with the yellow ones, both at the frequency of 1 Hertz. The message is now different:
**"Caution - vehicle stopped - engine running"**

In OPERATIONAL MODE 7, this invention also provides an extremely useful and efficient, as ingenious as practical resource which contributes to safety and to diminish the number of road accidents, as will be described below:

When red brake lights start blinking in synchronization with yellow caution lights because the vehicle has fully stopped, both sets of lights will continue indefinitely in the intermittent even if the driver has released the brake pedal and gets off the vehicle and although the engine has stopped by any failure. Then the red brake lights + yellow caution lights, both synchronously in the intermittent mode, become fully automatic double-intensity rear hazard lights. They will be deactivated only when "stepping" again on the accelerator to resume motion or when switching off the engine. In the latter case, the conventional hand-operated hazard lights turn on automatically which need to be turned off by hand once they are not necessary any more.

Such automatic rear hazard lights as described above will doubtless constitute an invaluable technological contribution to preventing road accidents, particularly in such situations where a driver stops his vehicle in the middle of the road whether as a result of a mechanical failure, a flat tire or any other reason, and forgets to activate the hand-operated hazard lights.

With respect to these electric hazard lights currently in use, which were implemented to meet the need for warning "danger - vehicle temporarily stopped", it is to be noted that day after day an increasing number of drivers activate them to drive both by day and by night under good or bad visibility and both on a road and in town, only because they are afraid of being collided from behind when stopping as a result of a very dense traffic.

As a consequence of this habit that is spreading everywhere little by little, when driving at a low visibility such as under heavy rain, fog or any other similar situation, many times the driver does not know whether the intermittent lights which can be seen ahead belong to a temporarily stopped or moving vehicle.

This flatly and irrefutably proves that the use of hand-operated electric hazard lights have fully distorted, owing to the fact that the rear sidelights of all motor vehicles are inappropriate and therefore inefficient. Hence the cure is worse than the disease, since undue use of hand-operated electric hazard lights complicates things even more by throwing drivers into confusion and promoting the occurrence of pile-ups.

The following teaching of Ford Argentina's "Safety Warnings Facts", 1998 edition, page 3.06 entitled "Fog or mist" are worthy of note: **Never turn the emergency (hazard) lights on when the vehicle is in motion.**

This short phrase from the Ford's manual irrefutably proves the pressing need for providing motor vehicles with an intelligent signaling system as the one provided by this invention.

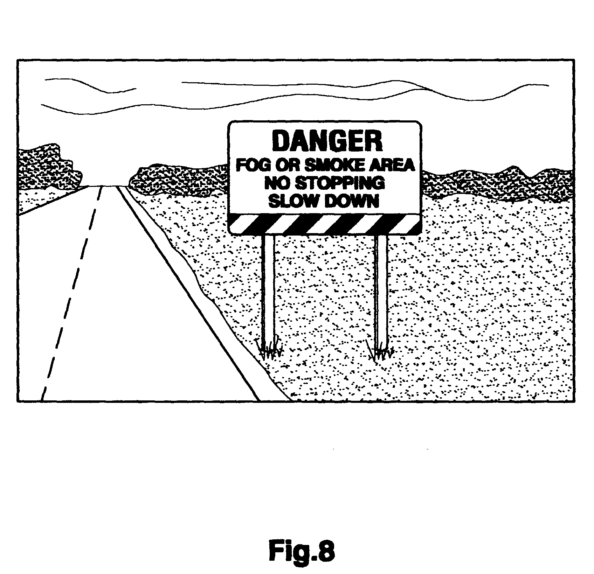

At this point it is to be noted that in many places along Argentine roads some signs read: "No stopping in case of fog". See accompanying photograph taken in Highway 8 near Junin, Province of Buenos Aires (See Fig. 8).

When a driver takes notice of one of those signs, the first question he asks himself is: what could it happen if my vehicle stops because of a mechanical failure or if I must stop owing to illness of myself or any of the car occupants, or to an accident?

If stopping on the road in case of fog constitutes a danger, what can be done to eliminate or minimize danger when it is necessary to stop the vehicle for any reason or when it stops because of some failure?

It is evident that stopping in the event of fog constitutes a danger because the rear lights of all vehicles, even the most modern and costly ones, are inappropriate in that they are not capable to warn if the preceding vehicle is in normal motion or has stopped. This reality becomes more dramatic in the middle of a very heavy rain and in particular when entering a fog bank, since in such situations visibility is down to nil and one can only perceive from a very short distance the lights of the preceding vehicle, behind which drivers usually tend to "couple" thinking that those lights pertain to a vehicle in motion, which is not always true. That is why the signs mentioned urge drivers not to stop.

In such situations, electric hazard lights would be a solution, but as it has been previously discussed, the use of those hazard lights is fully corrupted, not being any more useful for distinguishing a vehicle in motion from another one which is temporarily stopped, when the only visible thing is its rear lights.

A brief analysis of the foregoing will permit to appreciate that the present invention provides an ingenious, practical, very efficient solution to problems described in this chapter.

### MODE 8 = RIGHT / LEFT TURN

While turn indicator lights constitute something essential which was provided to automobiles almost four decades ago, they are not up to date in respect of the present technological development, mainly as regards their performance at the back of the vehicles, in particular by day when side marker lights are off. Also, by night, when side marker lights are one, their performance is opposite to logic, since whenever a driver activates his indicator to indicate, for example, a left turn, his vehicle emits backwards a yellow intermittent light on the left side, but such a signal superimposes on that side's red side marker lights.

Note that according to international traffic regulations: yellow light = caution, red light = danger. Thus, the driver would be emitting the following message: "caution on my left - I am going to turn"- "danger on my left and on my right". This is incongruous because in such a situation the danger actually is on the side of the turn, that is on the left, whereby on the right side of the vehicle of this example another signal should be emitted simultaneously indicating: **"Go-ahead to overtake on my right (or vice versa)".**

In spite of four decades of use of indicator lights in motor vehicles, they have not evolved as have science and technology. Currently, indicator lights indicate only one thing: "Caution - I am going to turn", showing the above-mentioned defect when they superimpose on night-use side marker lights.

To face such situations, the instant invention provides a really novel and practical solution, for the purpose of preventing accidents through the emission of intelligent luminous signals, that is signals containing distinguishing, specific unequivocal messages which can be easily interpreted by all drivers everywhere in the world.

For a better evaluation of the various advantages of this invention in its OPERATIONAL MODE 8 = TURN INDICATOR LIGHT, it is to be noted that the current electric system of motor vehicles provides a front and rear indicator light, only by means of an intermittent yellow light. In contrast, the system of the invention starts from a different, novel concept.

As discussed above for all operating modes studied herein, this new system was conceived and designed based on an essential idea already previously stated in this description: all motor vehicles should, when seen from behind, be considered as mobile traffic lights. Therefore, for the sake of road safety, its rear lights should not only indicate a position but should also indicate the situation of a vehicle at any moment, from startup until the end of its run, considering that motor vehicles, though necessary and practical, are also known as dangerous machines.

Also as discussed above, the objects of this invention are accomplished by providing a system in which a double set of rear lights (right and left side) in four different colors: red, yellow, green and blue is implemented, wherein all rear lights included in this novel system not only indicate a position as current side marker lights do, but also indicate, according to their color, the dynamic situation of the vehicle at any point of its run. It should be understood that the change of lights from one color to another is responsive to different driving operations performed by the driver, that the changes from one signal to another are fully automatic, not depending from the driver's will.

It is also worthy of note that light propagates at a speed of 300,000 kilometers per second, whereby each change of lights with its corresponding message will be perceived instantly from any distance by the driver travelling behind, which will allow him to act extremely quickly, if required.

In a vehicle equipped with this invention, whenever the driver operates the indicator stalk (switch), the side marker light corresponding to the side of the turn, whatever its color is at that instant, will automatically switch to the intermittent mode (at the frequency of 2 Hertz), while the side marker light for the opposite side, which will logically be of the same color, will continue steady.

The following example is analyzed for different situations:

### SITUATION A:

A vehicle travelling normally, that is without any difficulties, at a constant cruising speed, will emit backwards two green side marker lights. If its driver operates in anticipation the left indicator switch while still moving at constant speed, its left-side rear light, up to then steady green, will switch to intermittent green (at 2 Hertz), while the right-side rear light will remain unchanged, that is steady green. The message issued in advance will then be as follows:
**"Caution, moving forward normally, turning left - go-ahead on my right".**

### SITUATION B:

If later, instead of slowing down to turn, the driver accelerates for any reason, upon "stepping" on the accelerator his blue acceleration signals will turn on but the one on the left side will switch to the intermittent mode synchronously with the left green light, while the one on the right side will be steady as the right-side green one. Now the arrangement is as follows: green light + blue light on the left, both intermittent synchronizing at 2 Hertz, and green light + blue light on the right, both in the steady mode. In this situation, the new message is as follows:
**"Caution, vehicle accelerating, turning left - go-ahead on my right".**

### SITUATION C:

When at the end of the acceleration operation the driver releases the accelerator to lose speed, but without applying the brakes, assuming that his indicator stalk (switch) is still activated for a left turn, his green + blue lights will turn off, with the yellow lights, the 2-Hertz left-side intermittent light and the steady right-side light simultaneously turning on. Now the message is as follows:
**"Caution, slowing down - turning left - Possible sharp braking - Overtake cautiously on my right".**

### SITUATION D:

If the driver now begins to brake because he is getting near the place of turn, upon "stepping" on the brake pedal his red lights will turn on, the left-side one in the intermittent mode at 2 Hertz synchronously with the yellow light on the same side, and the right-side one in the steady mode together with the yellow light on the same right side. It is to be noted here that although upon pressing the brake pedal the right-side yellow light will switch from the steady mode to the intermittent mode so as to emphasize the "braked vehicle" signal, no confusion is possible as a result of interference with the left turn signal because the right-side yellow light oscillation frequency will be 1 Hertz, while all turn indicator signals will always oscillate at two times that frequency, that is 2 Hertz.

As can be seen so far, the indicator lights of the invention applied to motor vehicles are not, as opposite to the current system, always the same (except for front lights which are not included in the present system) but are dynamical because they change in the same way as the situation of the vehicle varies along its run. The red-yellow-green or blue side marker lights switch to the intermittent mode on the selected side upon operating the indicator switch, the ones on the opposite side remaining unchanged, whereby indicator light signals provided by this invention prove much more effective than the currently used signals in that they provide additional information.

Furthermore, with regard to the indicator light feature of this new invention, it is noteworthy that whenever any side marker light starts flickering on the side chosen for the turn, the flickering always occurs at the frequency of 2 Hertz, 2 times per second, while when the red and/or yellow lights flicker to emphasize the "vehicle braking' or "vehicle stopped - engine running" situation, such a flickering will always take place at a frequency of 1 Hertz, once a second. Then, when the flickering occurs on one (right or left) side, it is evidently about a turn indicator signal, while when flickering occurs on both sides, which only happens with red and/or yellow light, it is evident that the double-frequency flickering (the faster one) is that corresponding to the turn indicator signal.

It is also to be taken into account that human mind possess an excellent natural and instant capability to distinguish low-frequency rhythms, both in the audible range and in the visual range. Similarly, human mind is capable of instantly synthesizing any message contained in the luminous signals, for which knowing the code used -the meaning that has been assigned to each color- is enough.

### SITUATION E:

If the driver has finally applied the brakes and has stopped to make the turn as expected, at the same time when the movement reduces to zero, his left-side red + yellow lights will remain unchanged, flickering synchronously at a frequency of 2 Hertz, while his right-side red light, then steady, will start blinking synchronously with the yellow light on the same side at the frequency of 1 Hertz. In this case the message is as follows:
**"Caution - Vehicle stopped - I am going to turn left"**

According to the disclosure of this chapter, in the OPERATIONAL MODE 8 = RIGHT / LEFT TURN INDICATOR LIGHT the present invention provides really novel and necessary means aimed at improving road safety and preventing road accidents. Upon activating indicator lights not only the intention of changing lane and/or turning right or left will be revealed, but also simultaneously and instantly the dynamic situation of any vehicle at any time and place will be indicated, from the moment the turn indicator signal is activated until the turn is executed. This prevents the drivers moving behind from being surprised by an unexpected maneuver and allows them to be permanently aware of all intentions and driving operations of the driver preceding him.

As described herein above with regard to all functions of the device of the invention as well as through all illustrative examples obtained from a long experience driving motor vehicles, this invention will constitute a significant technical contribution in the automotive field in accordance with the present state of technological development. The reason is that the present invention provides a fully automatic computerized electronic device which, if applied to all motor vehicles, will allow them to emit intelligent light signals, that is distinguishing, specific, unequivocal signals for each situation, from startup to the end of the run, for the purpose of preventing accidents, thus contributing to improve road safety and make motor vehicle driving more pleasant.

For the purposes of the present invention, once the device of the invention has been adopted and implemented for use, it may be installed in all motor vehicles in the respective factories, including green and blue lights as required.

This invention can readily be applied to current vehicles, through the optimized utilization of existing parts such as reversing light and brake light switches, turn indicator switch, as well as red and yellow rear lights.

With regard to green and blue lights required by the new system, these may be provided on individual (right and left) bars of various models, suitable to be appropriately assembled either externally at the back of the vehicles or internally in the rear window, as the third brake light is currently placed in many vehicles. Such additional brake light will not be necessary any more once the present invention is implemented since this invention provides a more extensive and effective solution to the problems which originated implementation of said third brake light.

### 8 - TECHNICAL RESOURCES

The present invention contemplates considerable advances in respect of warning signals emitted by motor vehicles, through the implementation of this novel system which, by means of a device capable of generating/emitting intelligent luminous signals (signals containing distinguishing, specific messages for each driving operation as well as for each stage of the movement of a vehicle) starting from the engine startup, allows for the following maneuvers to be indicated: initial maneuvers like reversing and positioning for beginning a run; acceleration; normal motion at constant cruising speed; acceleration to increase the cruising speed or to overtake another vehicle; turn maneuvers to change lane or leave the road; free inertial motion (without use of accelerator and brakes) with slight loss of speed; inertial motion with brakes applied and fast speed reduction. The indications provided by the system of the invention also apply to the final stage in which the vehicle comes to a complete stop, either to end its run or to then restart movement.

These objects are accomplished by the present invention by providing a data receiving and processing system comprised of a network of sensors and a transducer specially conceived and designed for such purposes, the sensors and the transducer being connected to a control unit having an electronic microprocessor. All these elements form an assembly referred to as **"intelligent light driving system"** for the implementation of which the following technical resources have been resorted to:
1 - An optoelectronic transducer which, **either placed at the gearbox output or inserted in any vehicle's speedometer cable,** converts the mechanical rotational motion into electric impulses which allows to determine whether the vehicle is stopped or in motion. Said transducer may also be capacitive, magnetic, inductive or of any other type.
2- **A magnetic sensor placed in the accelerator pedal or in the carburetor or at any point of the linkage communicating both,** the function of which is precisely detecting the moment when the accelerator is activated and the moment when the driver releases the accelerator. Said sensor may also be mechanical, optical, capacitive, inductive or of any other type.
3 - **A sensor placed in the gear lever,** which function is to detect the reverse gear selection. The electric switch for reversing light existing in all vehicles is adapted to fulfil this function.
4 - **A sensor disposed in the brake pedal,** the function of which is detecting the braking action. The existing electric brake light switch is adapted to carry out this function.
5 - **A double output sensor,** the function of which is detecting the selection of right or left turn indicator signal. The reversing switch coupled to the indicator switch, already existent in all vehicles, is adapted to fulfil this function.
6 - **A control unit having an electronic microprocessor** with multiple inputs and outputs to which all sensors and the transducer previously mentioned are connected; this unit may be placed anywhere in the vehicle. The main functions of the unit are as follows:
   a): Analyzing and processing impulses from the transducer to determine whether the vehicle is in motion or stopped.
   b): Determining whether the vehicle is moving at constant speed or is accelerating.
   c): Analyzing and processing all information from the transducer and the sensors and converting such information into command pulses to activate the side marker lights which, as a result of their distinguishing colors and their being steady or intermittent, will become **intelligent luminous lights.**
   d): Detecting the vehicle movement when the vehicle is reversing and consequently canceling all other functions related to forward movement to generate the command pulses required to activate reverse signals.
7 - **An electric switch** to activate the whole system. The ignition switch or key already existing in all vehicles is suitable to meet this requirement.

### 9- BRIEF DESCRIPTION OF THE DRAWINGS

The features of the present invention and objects thereof may be best understood by reference to the following accompanying drawings which illustrate some non-limiting preferred embodiments of the invention.
Figure 1 is a perspective view of transducer TR-1.
Figure 2 is a exploded view of the different components of transducer TR-1.
Figure 3 is a cross-sectional view of the same device including its component parts and functional connections. It also shows both ends of the speedometer cable and how these ends are connected to said transducer.
Figure 4 is an upper plan view of the gear wheel 27 and its connection with the optical coupling 32.
Figure 5 shows the accelerator magnetic sensor S-4 and its basic installation mode.
Figure 6 shows the whole system including the control unit with the microprocessor and the other components of the circuit, the transducer and the network of switches/sensors connected to their corresponding inputs, and the double set of rear lights connected to their corresponding outputs.

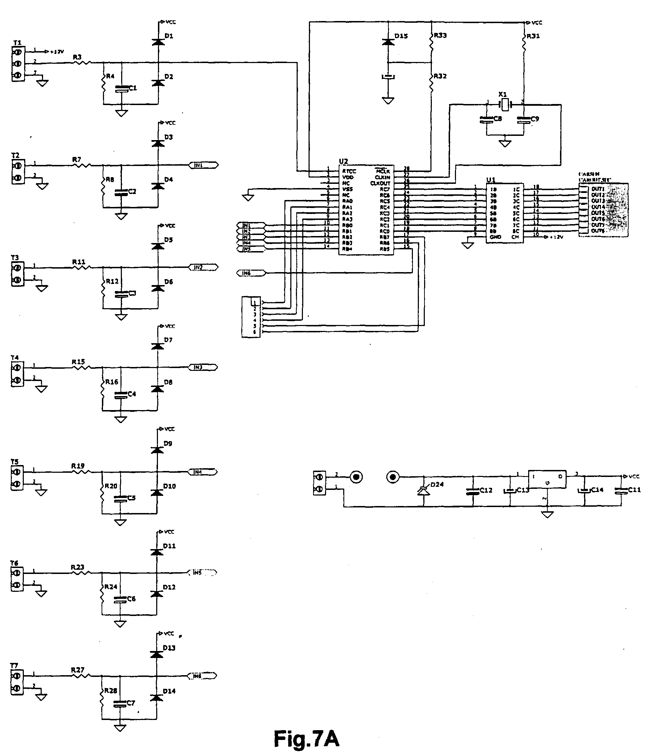

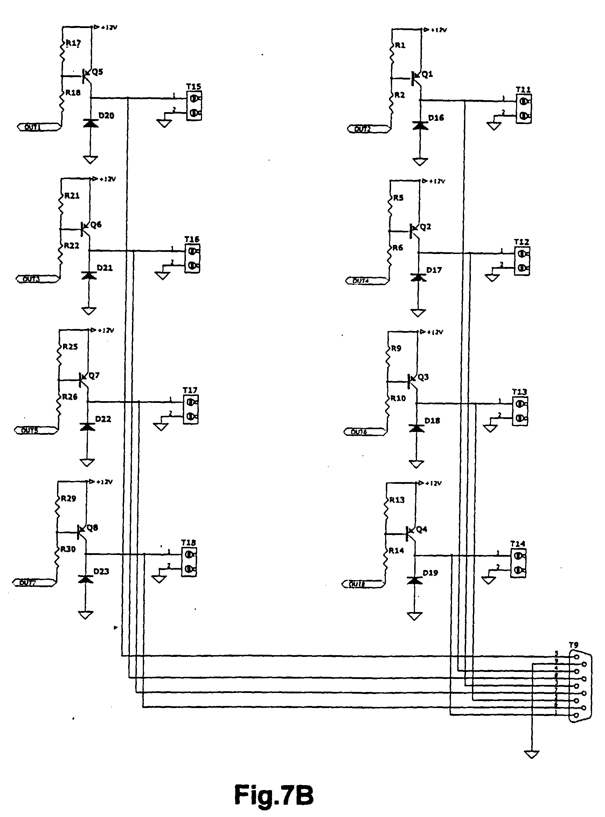

Figures 7a and 7b are a schematic diagram of the control unit electronic circuit.
Figure 8 is a photograph of a sign as often seen in Argentine roads. This photograph was taken at State Road 8 near Junin.

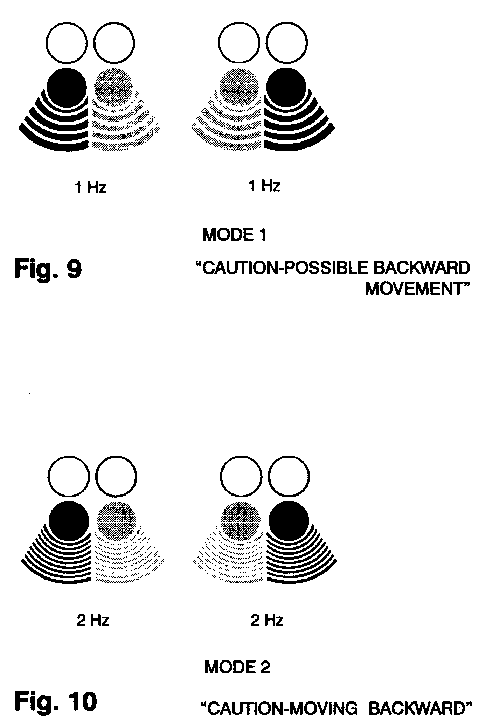

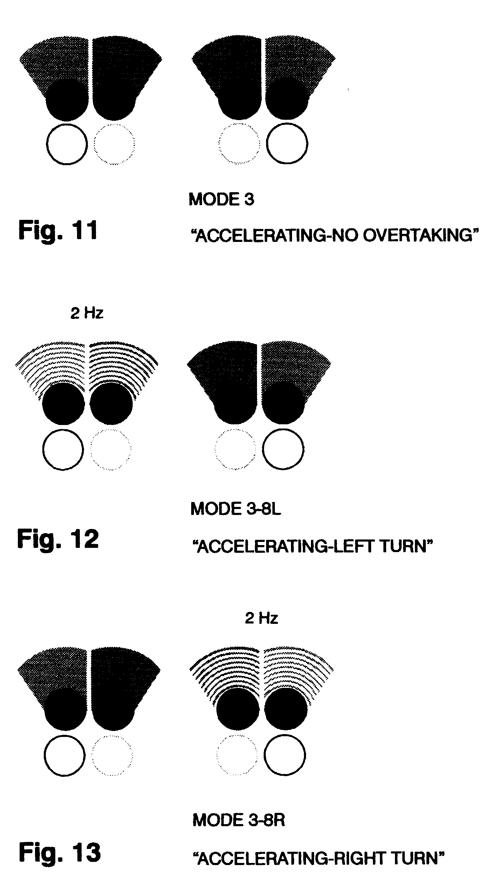

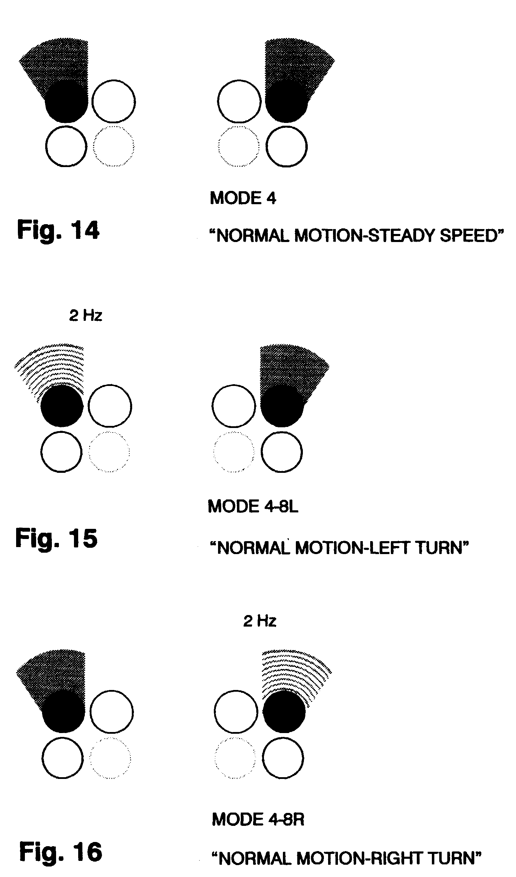

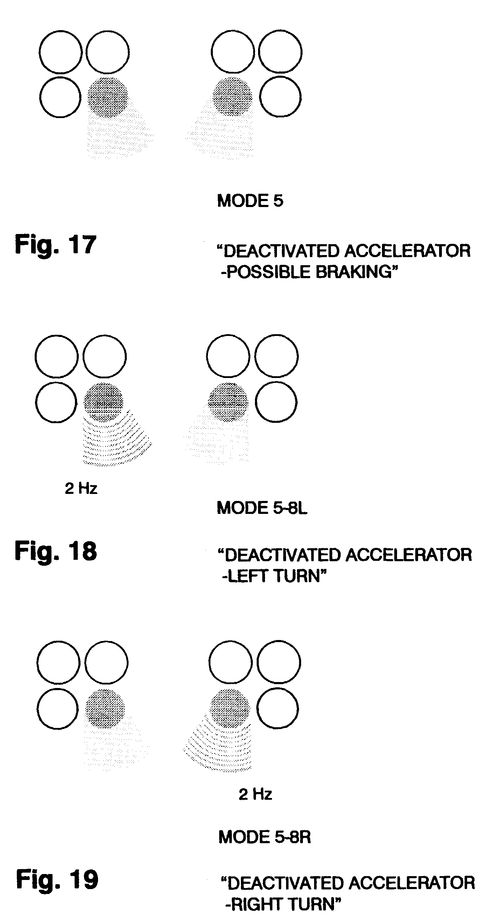

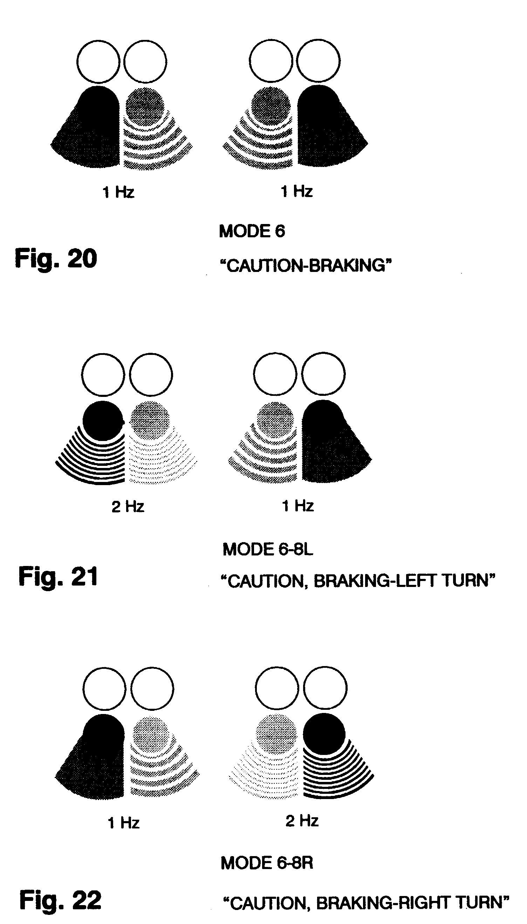

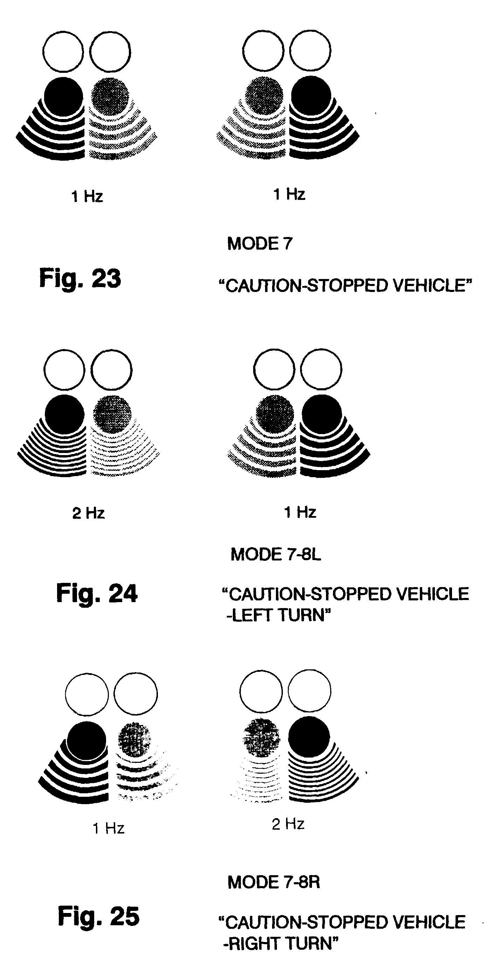

Figures 9 to 25 show the distinguishing signals and their corresponding messages for each of the operational modes of the present invention.

### 10- DESCRIPTION OF THE ELECTRONIC TRANSDUCER TR-1

This transducer is a device which, being either coupled to the gearbox output (or gears) or inserted in the speedometer cable, converts mechanical rotational motion into electric impulses such as used in taximeters and tachographs. However, the transducer is similar to these devices only in regard of its function of detecting rotational motion, its physical shape and installation mode. Said known devices are not applicable to the present invention because one of the essential features of the invention, as is perception of acceleration in a vehicle's movement, requires a minimum number of pulses per second (which is not provided by those devices) in order that the acceleration can be quickly detected and measured at any time. Thus, a transducer having special features such as the one described below has been conceived and developed:

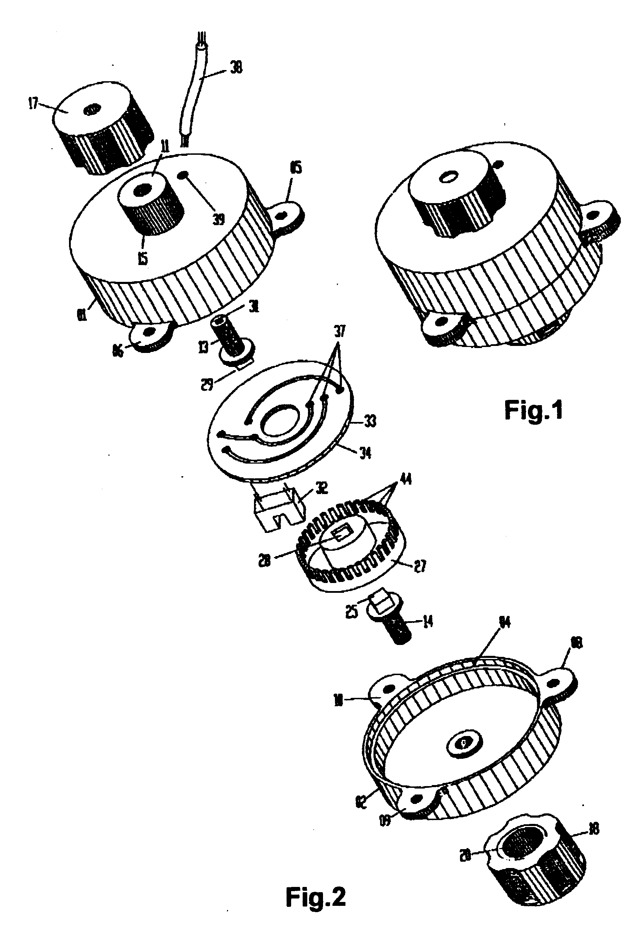

The transducer (Fig. 1, 2, 3) is comprised of a cylindrical housing injected in rigid plastic material, made of two matching portions 1, 2. The coupling edges of both portions have peripheral male-female recesses 3, 4 to ensure a precise, tight closure. Upper portion 1 includes in its peripheral edge three perforated tabs 5, 6, 7 (Fig. 2-B) disposed in an equidistantly triangular arrangement opposed to the corresponding three similar tabs 8, 9, 10 (Fig. 2-B) of lower portion 2. These tabs allow for both portions 1 and 2 to be fastened by means of screws and nuts or metallic rivets.

Both portions 1 and 2 also respectively include projecting bodies 11, 12 having through holes to respectively accommodate coupling shafts 13, 14 as well as external threads 15, 16 which allow connectors 17, 18, having respective internal threads 19, 20 to be secured. Connectors 17, 18 fasten ends 21, 22 of the speedometer cable which has to be sectioned at the point in which the present device is to be inserted.

The perforated center of lower housing 2 accommodates coupling shaft 14 the lower end of which has a square-shaped hole 23 to receive the speedometer cable end 24. The upper end of said coupling shaft 14 includes a square-shaped tooth 25 which engages the square recess in the lower center 26 of the gear wheel 27 to which the shaft 14 transmits its rotational motion received in turn from the vehicle gearbox through the speedometer cable 22.

In turn, the gear wheel 27 transmits its rotational motion to coupling shaft 13 through square recess 28 into which fits square tooth 29 pertaining to the lower end of coupling shaft 13. The latter, in turn, transmits its rotational motion to the upper section of speedometer cable 21, which end 30 fits into the square-shaped hole 31 in the upper end of said coupling shaft 13.

Thus, the rotational motion transmission circuit is restored between the gearbox and the speedometer, which had been interrupted when cutting the speedometer cable for inserting transducer TR-1.

It is noteworthy that said transducer TR-1 may also be disposed, if possible, at the gearbox output or at the speedometer input, through suitable connectors, thus eliminating the need for cutting the speedometer cable.

The upper portion of housing 1 contains a slot-like optical coupling 32 secured to circular plate 33 on which surface 34 are printed three copper tracks to which the pairs of terminal wires 35, 36 of the optical coupling 32 are welded, while lugs of cable 38, which connects transducer TR-1 to the microprocessor, are welded on the opposite end 37.

Said cable 38 emerges through hole 39 from the upper right edge of housing 1. In turn, a central rounded projection 40 contained inside the housing 1 fits into a hole matching the projection 40 and centrally disposed in the circular plate 33. The external edge of plate 33 rests on a peripheral step 41 built in the inside of housing 1.

The left wall of the optical coupling 32, which is in the shape of an inverted U, accommodates an infrared light emitting diode 42, which light beam projects towards the complementary receiving diode 43 contained in the opposite wall, through the space separating both walls. Said optical coupling 32 is connected to the corresponding control unit input by means of a three-wire cable 38 in which one of the wires conducts electric power feeding infrared diodes 42, 43, another wire carries information sent by the transducer to the microprocessor, and the third wire is the return conductor as in every electric circuit.

Said cable 38 also includes an external wire mesh or metallic sheath connected to the chassis or general mass of the vehicle which functions as a shield against possible interference arising from the engine electric ignition system and other sources of electrostatic noises, very common in motor vehicles.

The gear wheel 27 the connection of which to shafts 13, 14 has already been described, includes on its external edge a peripheral flange 44, perpendicular to the wheel plane. Said flange has symmetric vertical slots equidistant all along its perimeter, thus forming vertical teeth which are also symmetric and equidistant, as shown in Fig. 2-A.

### 11 - PRINCIPLES OF TRANSDUCER TR-1 OPERATION

This transducer, inserted in any vehicle's speedometer cable, produces an electric pulse train in the form of a square wave whenever the vehicle starts and until it comes to a complete stop. Such operation is described in detail below:

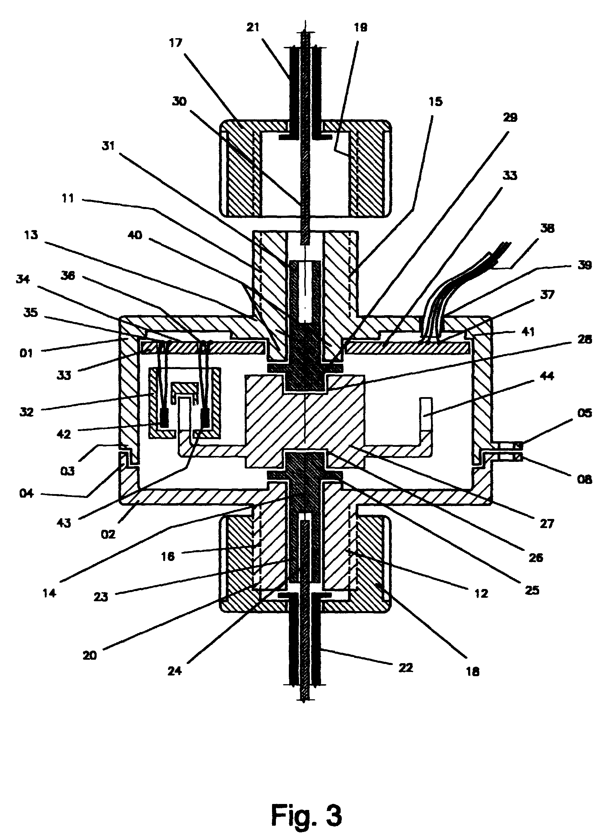

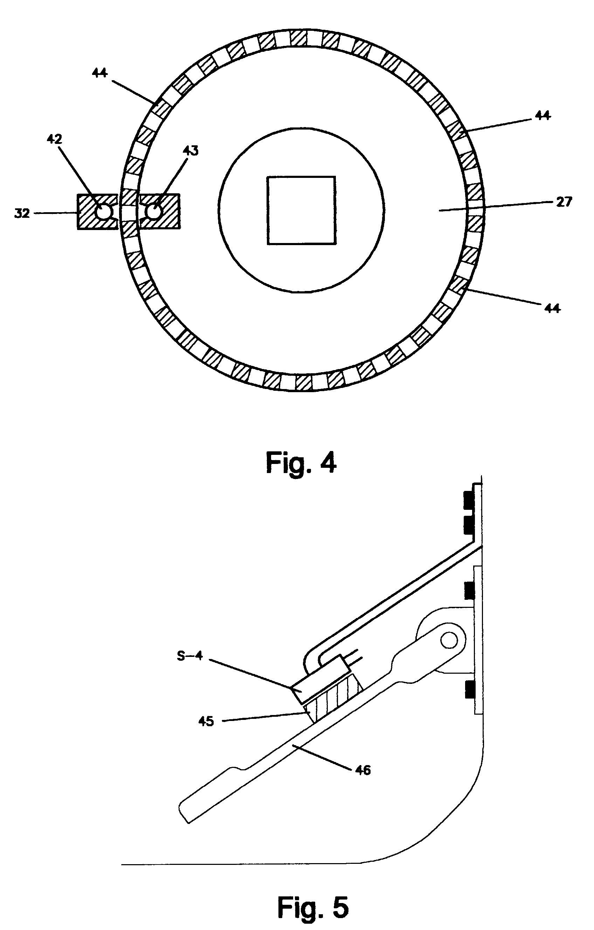

Upon starting the engine of the vehicle, the control unit sends an electric current to the optical coupling 32 causing the latter to supply a positive voltage at its output. When the vehicle starts moving, the central speedometer cable (24, 30) starts rotating in conjunction with coupling shafts 13, 14 and gear wheel 27, thus causing teeth 44 of said wheel continuously cross the light beam from the optical coupling 32, as shown in Figures 3 and 4.

Whenever any teeth 44 of wheel 27 cross the light beam projected by the emitting diode 42 against the receiving diode 43, the circuit breaks and the positive voltage at the output of optical coupling 32 falls to zero. In contrast, whenever a space between teeth 44 allows the light beam to pass, the circuit restores thus causing the optical coupling 32 to supply again a positive voltage.

The successive passage of teeth and spaces through the infrared light beam produces a stream of electric impulses in the shape of a square wave which amplitude is equal to the vehicle's battery voltage and which frequency depends on rotational speed of wheel 27. In short, a signal is obtained the frequency of which is proportional to the vehicle's speed.

Since said wheel 27 has 34 teeth and 34 spaces -all of them equidistant-, this device generates 34 positive impulses per each complete rotation of wheel 27.

Such a number of impulses is necessary in order that the unit control microprocessor not only detects the least movement of the vehicle but also makes extremely quickly all calculations needed to detect acceleration, if any.

### 12- DESCRIPTION OF THE ACCELERATOR SENSOR S-4

The accelerator sensor S-4 consists in a vacuum switch which is activated by the proximity of a magnetic field provided by a ceramic magnet 45 which is mounted on the accelerator pedal rod, as shown in Figure 5, while sensor S-4 is mounted on any rigid support which shape will be adaptable to each model of vehicle, such that when the accelerator is in the normal rest position, the sensor S-4 remains inside the magnetic field of ceramic magnet 45 (see Fig. 5).

Said sensor may also be mounted on the carburetor or any point of the system of rods linking the carburetor and the accelerator pedal.

### 13 - DESCRIPTION OF THE CONTROL UNIT

The device that will be described below is an **intelligent microprocessor-driven motor vehicle signaling light controller.**

Microprocessors are solid-state electronic devices which contain thousands of microtransistors, diodes and gates. These make simultaneously an infinity of calculations and operations to perform multiple functions. Hence, it is practically impossible to describe the path followed by electric current in such labyrinthine microcircuitry.

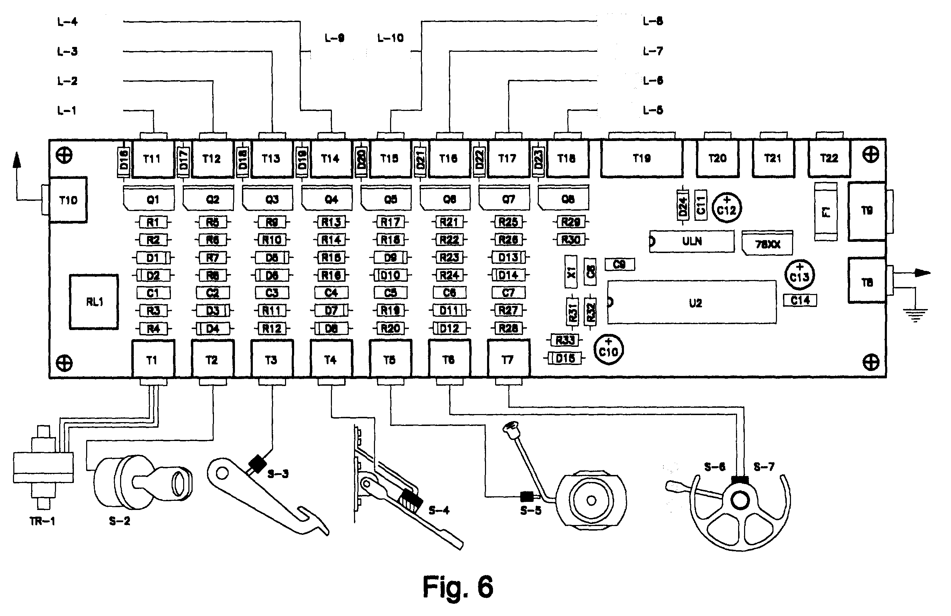

Therefore, the microprocessor as shown in Figure 6 will be described below as a device with, responsive to given input signals, makes scheduled decisions and supplies output signals as a function of said inputs.

The inputs to microprocessor U-2 (Figure 6), six of which are utilized in this case, are connected to switches/sensors installed in the vehicle. Such inputs are as follows:
Input T1 - For Impulse generating transducer TR-1
Input T2 - For ignition key S-2
Input T3 - For brake pedal sensor S-3
Input T4 - For accelerator pedal sensor S-4
Input T5 - For reversing lever sensor S-5
Input T6 - For right turn indicator switch S-6
Input T7 - For left turn indicator switch S-7

Of available microprocessor U-2 outputs, eight are used: T-11 to T18, of which four are assigned to the group of rear lights mounted on the vehicle's left side and the other four are assigned to rear lights mounted on the right side, as detailed below:
Output T-11 feeds right-side red rear light L-1
Output T-12 feeds left-side yellow rear light L-2
Output T-13 feeds left-side green rear light L-3
Output T-14 feeds left-side blue rear light L-4 and left-side blue front light L-9
Output T-15 feeds right-side blue rear light L-8 and right-side blue front light L-10
Output T-16 feeds right-side green rear light L-7
Output T-17 feeds right-side yellow rear light L-6
Output T-18 feeds right-side red rear light L-5
Outputs T-20 and T-21 are provided to respectively feed left and right front turn indicator lights, already existing in all vehicles, for these to flicker synchronously with rear lights provided by this invention.
Output T-22 is provided for reversing audible signal.

As microprocessor outputs supply very low currents, in order to light vehicles lamps it is necessary to add some kind of power interface. In the present design the different microprocessor outputs are connected to a ULN-type exciting driver which in turn excites the bases of group of TO-22D-type power transistors: Q1, Q2, Q3, Q4, Q5, Q6, Q7 and Q8.

The program which allows operation of microprocessor U-2 has been specifically designed for this device and is recorded on an EPROM memory connected thereto.

The 5 V DC feeding voltage is derived from the vehicle's battery by means of a 7BXX regulator and an inductive parasitic noise filter. The circuit also includes a piezoelectric crystal X1 which provides a stable time reference necessary for the right operation of the microprocessor.

Each one of the switches/sensors supplies, when operated, a logic 1 to the corresponding input as a function of the different combinations of switches/sensors operated during vehicle driving. The system takes then all decisions scheduled in the program and turns on all appropriate lights.

Both in the inputs and in the outputs there exist passive component networks which shape the signals and adapt voltages and currents to optimum, safe levels for the active components such as resistors R-1 to R-23, capacitors C-1 to C-14 and diodes D-1 to D-24. The whole circuit is protected by a fuse F-1.

All components mentioned above are mounted on a unique plate containing a circuit printed in copper tracks on epoxy material FR4. The plate includes a solder mask and printed components.

With regard to the physical connections between the circuit and the outside world, extremely strong plug-in male/female connectors, identified in the circuit as T-1 to T-22, which allow for solid and safe anchoring.

That plate also includes a high-current relay RL-1 which is activated when operating the engine ignition key, by disconnecting power supply to the hand-operated hazard lights for the latter not to interfere with the automatic hazard light provided by this invention, thus preventing said hand-operated hazard light to be wrongfully used during driving, as stated in OPERATIONAL MODE 7 = STOPPED VEHICLE.

The connection between said relay RL-1 and the hand-operated hazard light is executed through connector T-10. Said relay is deactivated upon switching off the vehicle's engine, thus the conventional hand-operated hazard light being automatically enabled.

Optionally, a plate allowing the user to monitor the operation of the system may be connected to the main circuit. Such an optional plate comprises a group of LED diodes, mounted on a printed circuit identical to the main circuit, which repeat the location and colors of the vehicle's lights. This equipment could be installed in the vehicle's instrument panel. This monitoring system is connected by means of a plane cable to the main plate's output T-9 (Fig. 6).

Another optional equipment comprises a power interface identical to the one described above, in order to allow the intelligent light system provided by the present invention to be applied to trailer units and caravans which may be hauled by the vehicles, for which purpose output T-19 is provided.

Connector T-8 allows for the direct connection to the battery as well as for the return to the vehicle chassis. Both the main circuit and the optional ones may be mounted on metallic housings having appropriate anchoring systems and resistant finishing coats.

Once the present system has been installed in any motor vehicle as depicted in Figure 6, the device of the invention is capable to operate in 8 different modes, fully automatically switching from one mode to another.

Thus, the device of the invention detects each and every driving operations by the driver, from the vehicle engine startup to the end of its run, then emitting intelligent luminous signals of different colors in each mode and circumstance, without causing the driver any worry.

Said signals contain clear, specific messages to inform and warn those driving behind, as described in detail and exemplified in Chapter 6 of this description, "FUNCTIONAL MODES OF THE DEVICE OF THIS INVENTION".

In the practice of the present invention, various modifications can be made by those skilled in the art to optimize its application with regard to light flickering synchronism and frequency, light location, shape and arrangement, which will vary depending on the vehicle's trademark, model and type.

Modifications can also be made to certain construction details, the types of circuits, the shape and type of the transducer T-1 device, the accelerator pedal sensor S-4 and the microprocessor-operated control unit, without departing from the true spirit and scope of the basic underlying principles of the invention in accordance with the recitation of the appended claims.

## Claims

1. An electronic apparatus for emitting intelligent luminous signals, applicable to all types of motor vehicles and motorcycles for the purpose of preventing road accidents, which allows for the use of a new system for the emission of messages synthesized in the form of lights of different colors, the apparatus comprising:
a control unit connected to a set of sensors connected in key points of each vehicle to specially designed circuits which automatically and continuously detect all movements effected by a driver during driving operations from engine startup to switch-off, said control unit comprising:
an electronic microprocessor operatively connected to said sensors through passive networks, wherein
said microprocessor having inputs to receive signals from said sensors for processing, and outputs through which control signals are supplied, and wherein
said outputs are operatively connected to a set of signaling light through passive networks and active power interfaces;
an EPROM-type non-volatile programmable memory unit to permanently store the instructions for microprocessor operation according to the received input signals; and
a feeding circuit connected through said vehicle's ignition key to the battery thereof; and
a double set of rear lights of four different colors, red, yellow, green and blue which become "intelligent luminous signals", each of which synthesizes an distinguishing, specific, unequivocal, easily and instantly interpreted message such that all drivers are permanently warned of different driving operations that are performed by drivers moving ahead, thus allowing them to act in anticipation and preventing them from being surprised by a sharp and sudden maneuver and/or braking.

2. An apparatus according to claim 1, wherein one of said sensors is a transducer, coupled to the gearbox (or gears) output or inserted into said vehicle's speedometer cable, which upon the least movement of said vehicle generates a signal, indicating the vehicle's movement, applied to one of the inputs of said microprocessor; said microprocessor generating an output signal indicative of the state of movement of the vehicle according to instructions obtained the non-volatile memory; said transducer being optoelectronic, capacitive, magnetic, resistive, inductive or of any other type.

3. An apparatus according to claims 1 and 2, wherein one of said sensors is connected to said ignition key which generates an indicating signal applied to said microprocessor, said microprocessor generating an output signal according to instructions obtained from the non-volatile memory, said signal indicating that the vehicle is in a condition to operate by simultaneously turning on red and yellow rear side marker lights, both in synchronism in the intermittent mode at a frequency of 1 Hertz, wherein said lights, as a result of their combination of colors and joint oscillation, become a "double-intensity automatic hazard light" thus synthesizing the following message: "Caution - Stopped vehicle - Possible maneuvers".

4. An apparatus according to claims 1 to 3, wherein said apparatus includes another circuit specially designed in order that at the time reverse movement is started said microprocessor generates an output signal according to instructions obtained from non-volatile memory, said signal indicating that said vehicle is reversing by emitting an audible signal and immediately changing the oscillation frequency of said red and yellow rear side marker lights, thus changing simultaneously from 1 Hertz to 2 Hertz, wherein such lights, as a result of their color combination and joint oscillation at a frequency 2 times greater than during vehicle stoppage, clearly synthesize the following message: "Caution - moving backwards".

5. An apparatus according to claim 4, wherein said apparatus includes another circuit specially designed such that at the time of finishing reverse movement said microprocessor generates an output signal according to instructions obtained from the non-volatile memory, said signal indicating that said vehicle has ended backward movement and is available for new maneuvers by immediately changing the oscillation frequency of said red and yellow rear side marker lights, both simultaneously varying from 2 Hertz to 1 Hertz, thus becoming again a "double-intensity automatic hazard light" which synthesizes the following message: "End of reversing - Caution - possible new maneuvers".

6. An apparatus according to claims 1 and 2, wherein one of said sensors is a magnetic sensor which may also be mechanical, optoelectronic, capacitive, resistive, inductive or of any other type and, as a result of said sensor being coupled to the accelerator pedal, to the carburetor or to any point at the system of rods or cable connecting both, whenever said accelerator pedal is pressed down, said sensor generates an indicating signal applied to said microprocessor, said microprocessor generating an output signal according to instructions obtained from the non-volatile memory, said signal indicating that the vehicle is moving normally at a constant speed by canceling said red and intermittent yellow (automatic hazard light) rear side marker lights and simultaneously causing the green rear side marker lights to be turned on which, as a result of their color, clearly synthesize the following message: "Normal speed - Constant speed - Go-ahead to go on moving behind or overtake".

7. An apparatus according to claims 1, 2 and 6, wherein said apparatus includes another circuit specially designed such that when the electric impulses from said transducer have an increasing frequency as a result of said vehicle being travelling at a increasing speed (in acceleration) said microprocessor generates an output signal according to instructions obtained from the non-volatile memory, said signal indicating that said vehicle is accelerating by turning on blue rear side marker lights which, as a function of their color and in combination with said rear green lights (which remain unchanged), clearly synthesize the following messages: "Caution - accelerating - No overtaking" (for drivers situated behind) and "Caution - accelerating - No crossing in front" (for those drivers situated in front and/or both front sides).

8. An apparatus according to claims 1, 2 and 6, wherein said apparatus includes another circuit specially designed such that upon releasing said accelerator, thus deactivating the corresponding sensor, said microprocessor generates an output signal according to instructions obtained from non-volatile memory, said signal indicating that said vehicle is in a condition to brake, by canceling said green rear side marker lights and by simultaneously activating said yellow rear side marker lights which, as a result of their color, clearly synthesize the following message: "Caution - possible sharp braking".

9. An apparatus according to any of the preceding claims, wherein one of said sensors is connected to the brake pedal switch (existing in all vehicles) through an electric connecting cable and wherein said apparatus includes another circuit specially designed such that upon stepping on said brake pedal said microprocessor generates an output signal according to instructions obtained from the non-volatile memory, said signal indicating that said vehicle is braking by turning said red rear side marker lights on, and by simultaneously changing the state of said yellow rear side marker lights, the latter automatically switching from the steady mode to the intermittent mode at the frequency of 1 Hertz to emphasize the braking signal, such that said steady red lights in conjunction with said intermittent yellow lights clearly synthesize the following message: "Caution - braking".

10. An apparatus according to any of the preceding claims, wherein said apparatus includes another circuit specially designed such that upon releasing said brake pedal when the vehicle is still in motion said microprocessor generates an output signal according to instructions obtained from non-volatile memory, said signal indicating that said vehicle has interrupted braking and can accelerate by canceling said red rear lights and, in order that said yellow rear lights remain unchanged, by oscillating at a frequency of 1 Hertz, thus synthesizing the following message: "Braking interrupted - Caution - Braking can restart at any moment", wherein said intermittent yellow lights will turn off only by stepping again on said accelerator pedal, in which case said green lights will simultaneously be turned as claimed in claim 6.

11. An apparatus according to any of the preceding claims, wherein said apparatus includes another circuit specially designed such that while pressing said brake pedal with the vehicle still in motion said microprocessor generates an output signal according to instructions obtained from the non-volatile memory, such that the red rear side marker lights remain on in the steady mode together with said yellow rear side marker lights in the intermittent mode at the frequency of 1 Hertz, and at the end of the braking process, at the time the vehicle comes to a complete stop, said red rear lights automatically switch from the steady mode to the intermittent mode at a frequency of 1 Hertz in synchronization with said yellow lights, wherein said red and yellow lights become again, as a result of their color and joint oscillation at the same frequency, a "double-intensity automatic hazard warning light", thus clearly synthesizing the following message: "Caution - Stopped vehicle".

12. An apparatus according to claim 11, wherein said apparatus includes another circuit specially designed such that said microprocessor generates an output signal according to instructions obtained from the non-volatile memory, said signal continuing to indicate that said vehicle is stopped and allowing that said red rear and yellow lights, jointly oscillating at the frequency of 1 Hertz, continue to oscillate indefinitely, even if said brake pedal has been released and until the accelerator pedal is pressed again.

13. An apparatus according to any of the preceding claims, wherein one of said sensors is connected to the indicator switch (existing in all vehicles) through an electric connecting cable, and wherein said apparatus includes another circuit specially designed in relation to all other circuits as claimed in the preceding claims such that said microprocessor generates an output signal according to instructions obtained from the non-volatile memory, said signal simultaneously indicating the dynamic situation of said vehicle by preventing the rear indicator lights from remaining always the same, whereby upon operating the indicator switch, the rear side marker light corresponding to the side of the turn will, whatever its color at that instant, automatically switch to the intermittent mode at the frequency of 2 Hertz, while the rear light (of the same color) corresponding to the opposite side will remain unchanged, whereby said indicator lights not only warn of the intention of changing lane or turning right or left but also provide additional information since they simultaneously warn of the dynamic situation of each vehicle at any time from the moment said turn indicator light is activated until the turn is executed.

14. An apparatus according to claims 6 and 13 wherein said apparatus includes another circuit specially designed such that upon operating said indicator switch to turn right while the vehicle is moving at a constant speed, said microprocessor generates an output signal according to instructions obtained from the non-volatile memory to indicate that said vehicle is moving at a constant speed and is going to turn right by changing the state of said right-side green rear light from the steady mode to the intermittent mode at the 2-Hertz frequency and allowing the left-side green rear light to remain in the steady mode, thus synthesizing the following message: "Caution - Constant speed - I am going to turn right - Go-ahead on my left".

15. An apparatus according to claims 6, 13 and 14 wherein said apparatus further comprises another circuit specially designed such that upon operating said indicator switch to turn left said microprocessor generates an output signal according to instructions obtained from the non-volatile memory to indicate that said vehicle is moving at a constant speed and is going to turn left by changing the state of said left-side green rear light from steady mode to intermittent mode at the 2-Hertz frequency and allowing the right-side green rear light to remain in the steady mode, thus synthesizing the following message: "Caution - Constant speed - I am going to turn left - Go-ahead on my right".

16. An apparatus according to claims 7 and 13, wherein said apparatus further comprises another circuit specially designed such that upon operating said indicator switch to turn right while said vehicle is travelling at an increasing speed (in acceleration) said microprocessor generates an output signal according to instructions obtained from the non-volatile memory to indicate that said vehicle is increasing speed and is going to turn right by changing the state of said right-side green and blue rear lights from the steady mode to the intermittent mode at the frequency of 2 Hertz, and allowing left-side green and blue rear lights to remain in the steady mode, thus synthesizing the following message: "Caution - Increasing speed - I am going to turn right - Go-ahead on my left".

17. An apparatus according to claims 7, 13 and 16, wherein said apparatus further comprises another circuit specially designed such that upon operating said indicator switch to turn left said microprocessor generates an output signal according to instructions obtained from the non-volatile memory to indicate that said vehicle is increasing speed and is going to turn left by changing the state of said left-side green and blue rear lights from the steady mode to the intermittent mode at the frequency of 2 Hertz, and allowing right-side green and blue rear lights to remain in the steady mode, thus synthesizing the following message: "Caution - Increasing speed - I am going to turn left - Go-ahead on my right".

18. An apparatus according to claims 8 and 13, wherein said apparatus further comprises another circuit specially designed such that upon operating said indicator switch to turn right while said vehicle is travelling in inertial motion, without any use of accelerator and without applying brakes, said microprocessor generates an output signal according to instructions obtained from the non-volatile memory to indicate that said vehicle is reducing speed with a possible braking and is going to turn right by changing the state of said right-side yellow rear light from the steady mode to the intermittent mode at the frequency of 2 Hertz, and allowing left-side yellow rear light to remain in the steady mode, thus synthesizing the following message: "Caution - Decreasing speed - Possible sharp braking - I am going to turn right - Go-ahead on my left".

19. An apparatus according to claims 8, 13 and 18, wherein said apparatus further comprises another circuit specially designed such that upon operating said indicator switch to turn left, said microprocessor generates an output signal according to instructions obtained from the non-volatile memory to indicate that said vehicle is reducing speed with a possible braking and is going to turn left by changing the state of said left-side yellow rear light from the steady mode to the intermittent mode at the frequency of 2 Hertz, and allowing right-side yellow rear light to remain in the steady mode, thus synthesizing the following message: "Caution - Decreasing speed - Possible sharp braking - I am going to turn left - Go-ahead on my right".

20. An apparatus according to claims 9 and 13, wherein said apparatus further comprises another circuit specially designed such that upon operating said indicator switch to turn right while said vehicle is travelling in inertial motion with brakes already applied, said microprocessor generates an output signal according to instructions obtained from the non-volatile memory to indicate that said vehicle is braking and is going to turn right by changing the state of said right-side red rear light from the steady mode to the intermittent mode at the frequency of 2 Hertz, and simultaneously changing the right-side yellow rear light frequency from 1 Hertz to 2 Hertz in order that both (right-side red and yellow) lights oscillate in synchronism, thus synthesizing the following message: "Caution - Braking - I am going to turn right - Go-ahead on my left".

21. An apparatus according to claims 9, 13 and 20, wherein said apparatus further comprises another circuit specially designed such that upon operating said indicator switch to turn left, said microprocessor generates an output signal according to instructions obtained from the non-volatile memory to indicate that said vehicle is braking and is going to turn left by changing the state of said left-side red rear light from the steady mode to the intermittent mode at the frequency of 2 Hertz, and simultaneously changing the left-side yellow rear light frequency from 1 Hertz to 2 Hertz in order that both (left-side red and yellow) lights oscillate in synchronism, thus synthesizing the following message: "Caution - Braking - I am going to turn left - Go-ahead on my right".

22. An apparatus according to claims 10 and 13, wherein said apparatus further comprises another circuit specially designed such that upon operating said indicator switch to turn right while said vehicle is travelling in inertial motion with interrupted braking, said microprocessor generates an output signal according to instructions obtained from the non-volatile memory to indicate that said vehicle has interrupted braking and is going to turn right by changing said right-side yellow rear light frequency from 1 Hertz to 2 Hertz, thus synthesizing the following message: "Caution - Interrupted braking - Braking can restart at any time - I am going to turn right - Go-ahead on my left".

23. An apparatus according to claims 10, 13 and 22, wherein said apparatus further comprises another circuit specially designed such that upon operating said indicator switch to turn left, said microprocessor generates an output signal according to instructions obtained from the non-volatile memory to indicate that said vehicle has interrupted braking and is going to turn left by changing said left-side yellow rear light frequency from 1 Hertz to 2 Hertz, thus synthesizing the following message: "Caution - Interrupted braking - Braking can restart at any time - I am going to turn left - Go-ahead on my right".

24. An apparatus according to claims 11 and 13, wherein said apparatus further comprises another circuit specially designed such that upon operating said indicator switch to turn right while said vehicle is already stopped, said microprocessor generates an output signal according to instructions obtained from the non-volatile memory to indicate that said vehicle is stopped and is going to turn right by changing said right-side red and yellow rear light frequency from 1 Hertz to 2 Hertz, thus synthesizing the following message: "Caution - Stopped vehicle - I am going to turn right - Caution on my left".

25. An apparatus according to claims 11, 13 and 24, wherein said apparatus further comprises another circuit specially designed such that upon operating said indicator switch to turn left, said microprocessor generates an output signal according to instructions obtained from the non-volatile memory to indicate that said vehicle is stopped and is going to turn left by changing said left-side red and yellow rear light frequency from 1 Hertz to 2 Hertz, thus synthesizing the following message: "Caution - Stopped vehicle - I am going to turn left - Caution on my right".

26. An apparatus according to all preceding claims, wherein said apparatus includes another circuit specially designed such that whenever the vehicle engine is switched oft said microprocessor generates an output signal according to instructions obtained from the non-volatile memory and conventional hand-operated hazard lights are activated, thus forcing the driver to manually turn them off if they are not necessary.

27. A method for using the apparatus according to claims 1 to 26, allowing for the use of a new "intelligent luminous signals" code applicable to all types of motor vehicles and motorcycles for the purpose of preventing road accidents, the method being based on the operational sequence of any motor vehicle, as follows:
the startup of the vehicle's engine causes the red and yellow rear side marker lights to be simultaneously automatically turned on, both in synchronism in the intermittent mode at the frequency of 1 Hertz;
beginning reverse movement in order to do maneuvers generates an audible signal and causes the oscillation frequency of said red and yellow rear side marker lights to immediately change, thus simultaneously switching from 1 Hertz to 2 Hertz;
upon ending the former maneuver, the audible signal ends and the oscillation frequency of said red and yellow rear side marker lights immediately change, thus both simultaneously switching from 2 Hertz to 1 Hertz;
starting forward movement causes said intermittent yellow and red rear side marker lights (automatic hazard lights) to be immediately canceled and causes said green rear side marker lights to be simultaneously turned on which will remain on during normal movement at constant cruising speed without any obstacles;
if acceleration exists exceeding the threshold predetermined in the set of instructions stored in the non-volatile memory, then blue rear and front lights are immediately turned on which remain on until acceleration ends, the green rear side marker lights remaining unchanged;
deactivating the accelerator and the resulting inertial motion without the use of accelerator and brakes with a gradual speed reduction cause said green rear side marker lights to be cancelled and said yellow rear side marker lights to be immediately activated;
applying brakes and the resulting inertial motion and strong loss of speed instantly cause said red rear side marker lights to be turned on and cause said yellow rear side marker lights to simultaneously change of state thus automatically switching from the steady mode to the intermittent mode at the frequency of 1 Hertz;
releasing said brake pedal while the vehicle is still in motion causes said red rear lights to be cancelled while said yellow rear lights remain unchanged oscillating at a frequency of 1 Hertz;
pressing again said accelerator pedal causes said intermittent yellow lights to be turned off and said green lights are simultaneously turned on;
keeping said brake pedal pressed down while the vehicle is still in motion causes said red rear side marker lights to remain on in the steady mode in conjunction with said yellow rear side marker lights, the latter being in the intermittent mode at a frequency of 1 Hertz;
at the end of the braking process, at the time the vehicle comes to a complete stop, said red rear lights automatically switch from the steady mode to the intermittent mode at a frequency of 1 Hertz, in synchronism with said yellow lights;
the sequence ending with the complete stop of the vehicle;
the method providing to any driver wherever in the world a distinguishing, specific, unequivocal, easily and instantly interpreted signal for each of the mentioned stages, as a result of the luminous signals being of four different colors: red, yellow, green and blue; as a consequence of the colors contemplated and the signals being activated in the steady mode or the intermittent mode with two different oscillation frequencies, said signals synthesize the warning messages as detailed in each of the preceding claims, therefore allowing any driver to view each and every driving operations of the vehicle moving ahead of him, thus preventing such driver from being caught unawares by an unexpected, sudden maneuver.

28. The method according to claim 27, wherein said method prevents the indicator light signal from remaining always the same (yellow or red) to indicate only the intention of turning or changing lane as currently occurs for all vehicles, whereby causing said indicator signal to be contained in each of the signals as detailed in the preceding claim, since any of said signals may at the same time become a turn indicator signal whenever the right switch is activated, whereby the turn indicator light also provides, according to its color, all additional information contained therein.

29. A method according to claims 27 and 28, wherein whenever the ignition key is operated to start the engine of any vehicle, said method automatically starts in the mode "double-intensity automatic hazard warning light";
said red and yellow rear lights are automatically simultaneously turned on, both in the intermittent mode at the frequency of 1 Hertz, regardless of any voluntary action by the driver; and
upon switching off the vehicle's engine, said conventional hand-operated hazard lights are automatically activated, thus forcing the driver to manually turn them off if they are not necessary.
